# EUROPEAN PATENT APPLICATION

(11) **EP 3 836 733 A1**
(43) Date of publication of application: **16.06.2021**
(21) Application number: 18929018.2
(22) Date of filing: 09.08.2018
(51) Int. Cl.: H04W 76/19, H04B 7/06, H04W 16/28, H04W 74/08

(54) **USER TERMINAL AND WIRELESS COMMUNICATION METHOD**

(71) Applicant: NTT DoCoMo, Inc., Tokyo 100-6150 (JP)
(72) Inventor: MATSUMURA, Yuki, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2018/029993
(87) International publication number: WO 2020/031350

(57) **Abstract**

To properly control communication even when a BFR procedure is performed in multiple cells, a user terminal according to one aspect of the present disclosure includes a transmitting section that transmits a beam recovery request (Beam Failure Recovery reQuest (BFRQ)) on a cell in which a radio link failure has occurred, using a random access channel, and a control section that performs transmission of the random access channel in a given cell configured in advance or the cell in which the radio link failure has occurred.

## Description

### Technical Field

The present disclosure relates to user terminals and radio communication methods in next-generation mobile communication systems.

### Background Art

Long-Term Evolution (LTE) has been specified for higher data rates, lower delay, etc. in Universal Mobile Telecommunications System (UMTS) networks (Non Patent Literature 1). Further, LTE-Advanced (LTE-A, LTE Rel. 10 to 14) has been specified for higher capacity and more sophistication of LTE (LTE Rel. 8 and 9).

LTE successor systems (also called, for example, Future Radio Access (FRA), the 5th generation mobile communication system (5G), 5G plus (+), New Radio (NR), New radio access (NX), Future generation radio access (FX), LTE Rel. 14, 15, or later, etc.) are being studied.

In existing LTE systems (LTE Rel. 8 to 14), monitoring of radio link quality (Radio Link Monitoring (RLM)) is performed. When a Radio Link Failure (RLF) is detected by RLM, re-establishment of Radio Resource Control (RRC) connection is required of a user terminal (user equipment (UE)).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In future radio communication systems (e.g., NR), it is being studied to perform a procedure to detect a beam failure and switch to another beam (which may be referred to as a Beam Failure Recovery (BFR) procedure, BFR, or the like). In the BFR procedure, when a beam failure occurs, a UE reports a beam recovery request (Beam Failure Recovery reQuest (BFRQ)) to request the recovery of the beam failure.

By the way, in existing LTE systems, it has been specified that the BFR is performed only on a given cell (e.g., a primary cell) when communication is performed using multiple cells. In NR, it is being studied to apply the BFR procedure to multiple cells.

However, it has not been sufficiently studied how to control an operation such as a BFRQ report or a response from a base station to the report when the BFR procedure is performed on multiple cells.

Therefore, it is an object of the present disclosure to provide a user terminal and a radio communication method capable of properly controlling communication even when a BFR procedure is performed in multiple cells.

### Solution to Problem

A user terminal according to one aspect of the present disclosure includes a transmitting section that transmits a beam recovery request (Beam Failure Recovery reQuest (BFRQ)) on a cell in which a radio link failure has occurred, using a random access channel, and a control section that performs transmission of the random access channel in a given cell configured in advance or the cell in which the radio link failure has occurred.

### Advantageous Effects of Invention

According to one aspect of the present disclosure, communication can be properly controlled even when a BFR procedure is performed in multiple cells.

### Brief Description of Drawings

Fig. 1 is a diagram showing an example of a beam recovery procedure in Rel-15 NR.
Fig. 2 is a diagram showing an example of intra-band CA.
Fig. 3 is a diagram showing an example of inter-band CA.
Fig. 4 is a diagram showing an example of BFRQ transmission.
Fig. 5 is a diagram showing another example of BFRQ transmission.
Fig. 6 is a diagram showing an example of PRACH transmission in the presence of beam correspondence.
Fig. 7 is a diagram showing an example of PRACH transmission in the absence of beam correspondence.
Fig. 8 is a diagram illustrating a case where BF detection and BFRQ transmission are performed between cells having different SCSs.
Fig. 9 is a diagram showing an example of a case where BF detection and BFRQ transmission are performed between cells having different SCSs.
Fig. 10 is a diagram showing another example of a case where BF detection and BFRQ transmission are performed between cells having different SCSs.
Figs. 11A and 11B are diagrams showing an example of BFRQ response reception.
Figs. 12A and 12B are diagrams showing another example of BFRQ response reception.
Fig. 13 is a diagram showing an example of configuration of BFRQ response windows.
Fig. 14 is a diagram showing an example of a case where BFRQ response windows overlap.
Fig. 15 is a diagram showing another example of BFRQ response reception.
Fig. 16 is a diagram showing an example of a schematic configuration of a radio communication system according to one embodiment.
Fig. 17 is a diagram showing an example of an overall configuration of a base station according to one embodiment.
Fig. 18 is a diagram showing an example of a functional configuration of the base station according to one embodiment.
Fig. 19 is a diagram showing an example of an overall configuration of a user terminal according to one embodiment.
Fig. 20 is a diagram showing an example of a functional configuration of the user terminal according to one embodiment.
Fig. 21 is a diagram showing an example of a hardware configuration of the base station and the user terminal according to one embodiment.

### Description of Embodiments

In NR, communication using beam forming is being studied. For example, UEs and base stations (e.g., gNodeBs (gNBs)) may use beams used for signal transmission (also referred to as transmission beams, Tx beams, or the like) and beams used for signal reception (also referred to as reception beams, Rx beams, or the like).

When beam forming is used, deterioration of radio link quality is expected because it becomes susceptible to interference by obstacles. The deterioration of radio link quality can cause frequent radio link failures (RLFs). When an RLF occurs, cell reconnection is required. Thus, the frequent occurrence of RLFs leads to deterioration of system throughput.

In NR, to reduce the occurrence of RLFs, it is being studied that when the quality of a specific beam is deteriorated, a procedure to switch to another beam is performed (which may be referred to as beam recovery (BR), beam failure recovery (BFR), Layer 1/Layer 2 (L1/L2) beam recovery, or the like). The BFR procedure may be simply referred to as BFR.

A beam failure (BF) in the present disclosure may be referred to as a link failure.

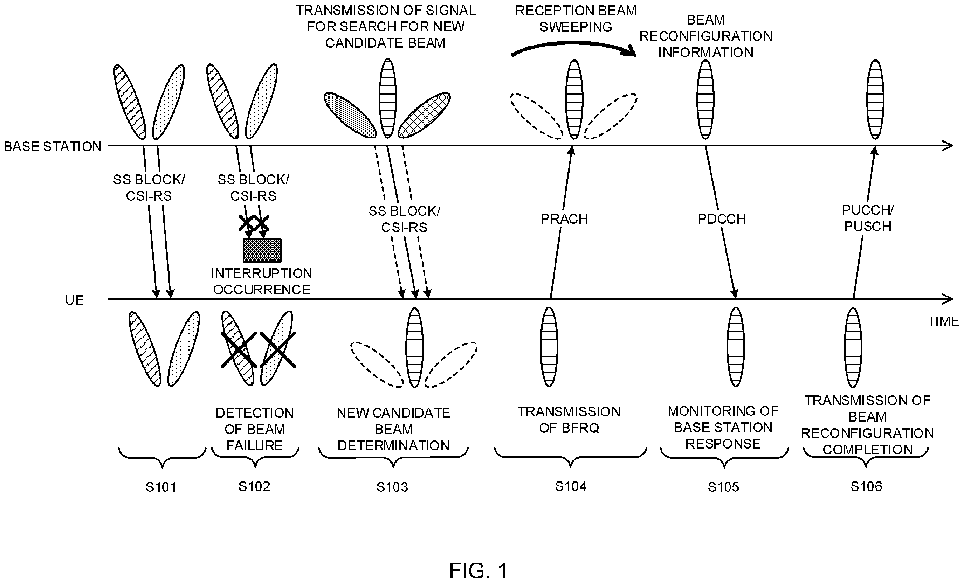

Fig. 1 is a diagram showing an example of a beam recovery procedure in Rel-15 NR. The number of beams etc. are an example, and are not limited to this. In an initial state (step S101) of Fig. 1, the UE performs measurements based on reference signal (RS) resources transmitted using two beams.

The RS may be at least one of a Synchronization Signal Block (SSB) and a Channel State Information RS (CSI-RS). The SSB may be referred to as an SS/Physical Broadcast Channel (PBCH) block or the like.

The RS may be at least one of a Primary Synchronization Signal (PSS), a Secondary Synchronization Signal (SSS), a Mobility Reference Signal (MRS), a signal included in an SSB, an SSB, a CSI-RS, a DeModulation Reference Signal (DMRS), a beam-specific signal, etc., or a signal configured, for example, by expanding or changing them. The RS measured in step S101 may be referred to as a Beam Failure Detection RS (BFD-RS).

In step S102, radio waves from the base station are interrupted, so that the UE cannot detect the BFD-RS (or the received quality of the RS is deteriorated). Such interruption can occur due to, for example, the influences of obstacles between the UE and the base station, fading, interference, etc.

The UE detects a beam failure when a given condition is satisfied. For example, if Block Error Rates (BLERs) are less than a threshold value in all configured BFD-RSs (BFD-RS resource configurations), the UE may detect occurrence of a beam failure. When the occurrence of a beam failure is detected, a lower layer (physical (PHY) layer) of the UE may report (indicate) a beam failure instance to a higher layer (MAC layer).

A criterion is not limited to the BLERs, and may be reference signal received power in the physical layer (Layer 1 Reference Signal Received Power (L1-RSRP)). Instead of the RS measurement or in addition to the RS measurement, beam failure detection may be performed based on a downlink control channel (Physical Downlink Control Channel (PDCCH)) or the like. The BFD-RS may be expected to be Quasi-Co-Location (QCL) with the DMRS of a PDCCH monitored by the UE.

Here, QCL is an index indicating the statistical properties of channels. For example, it may mean that if one signal/channel has a QCL relationship with another signal/channel, it can be assumed that these different signals/channels are the same in at least one of the Doppler shift, the Doppler spread, the average delay, the delay spread, and a spatial parameter (e.g., a Spatial Rx Parameter) (are QCL in at least one of these).

The Spatial Rx Parameter may correspond to a reception beam of the UE (e.g., a reception analog beam), and the beam may be identified based on spatial QCL. QCL (or at least one element of QCL) in the present disclosure may be replaced with spatial QCL (sQCL).

Information about the BFD-RS (such as the RS index, resource, number, number of ports, and precoding), information about beam failure detection (BFD) (e.g., the above-mentioned threshold value), etc. may be configured for (reported to) the UE using higher layer signaling or the like. The information about the BFD-RS may be referred to as information about BFR resources or the like.

In the present disclosure, higher layer signaling may be, for example, one of Radio Resource Control (RRC) signaling, Medium Access Control (MAC) signaling, broadcast information, etc., or a combination of these.

For the MAC signaling, for example, a MAC control element (MAC CE), a MAC Protocol Data Unit (PDU), or the like may be used. The broadcast information may be, for example, a Master Information Block (MIB), a System Information Block (SIB), Remaining Minimum System Information (RMSI), other system information (OSI), or the like.

The MAC layer of the UE may start a given timer (which may be referred to as a beam failure detection timer) when receiving a beam failure instance notification from the PHY layer of the UE. The MAC layer of the UE may trigger BFR (e.g., start one of random access procedures described later) when it has received the beam failure instance notification a certain number of times (e.g., beamFailureInstanceMaxCount configured by RRC) or more before the timer expires.

The base station may determine that the UE has detected a beam failure when there is no notification from the UE or when a given signal (a beam recovery request in step S104) is received from the UE.

In step S103, for beam recovery, the UE starts a search for a new candidate beam to be newly used for communication. By measuring a given RS, the UE may select a new candidate beam corresponding to the RS. The RS measured in step S103 may be referred to as a New Candidate Beam Identification RS (NCBI-RS), a CBI-RS, a Candidate Beam RS (CB-RS), or the like. The NCBI-RS may be the same as or different from the BFD-RS. A new candidate beam may be simply referred to as a candidate beam.

The UE may select a beam corresponding to an RS that satisfies a given condition as a new candidate beam. Of configured NCBI-RSs, the UE may determine a new candidate beam based on, for example, an RS whose L1-RSRP exceeds a threshold value. A criterion is not limited to L1-RSRP. L1-RSRP of an SSB may be referred to as SS-RSRP. L1-RSRP of a CSI-RS may be referred to as CSI-RSRP.

Information about an NCBI-RS (e.g., the RS resources, number, number of ports, precoding, etc.), information about new candidate beam identification (NCBI) (e.g., the above-mentioned threshold value), etc. may be configured for (reported to) the UE using higher layer signaling or the like. Information about an NCBI-RS may be obtained based on information about a BFD-RS. Information about an NCBI-RS may be referred to as information about NBCI resources or the like.

A BFD-RS, an NCBI-RS, etc. may be replaced with a Radio Link Monitoring RS (RLM-RS).

In step S104, the UE that has determined the new candidate beam transmits a beam recovery request (Beam Failure Recovery reQuest (BFRQ)). The beam recovery request may be referred to as a beam recovery request signal, a beam failure recovery request signal, or the like.

The BFRQ may be transmitted using, for example, at least one of an uplink control channel (Physical Uplink Control Channel (PUCCH)), a random access channel (Physical Random Access Channel (PRACH)), an uplink shared channel (Physical Uplink Shared Channel (PUSCH)), and a configured grant PUSCH.

The BFRQ may include information on the new candidate beam determined in step S103. A resource for the BFRQ may be associated with the new candidate beam. Beam information may be reported using a Beam Index (BI), a port index of a given reference signal, a resource index (e.g., a CSI-RS Resource Indicator (CRI) or an SSB resource indicator (SSBRI)), or the like.

In Rel-15 NR, contention-based BFR (CB-BFR) that is BFR based on a contention-based random access (RA) procedure and contention-free BFR (CF-BFR) that is BFR based on a contention-free random access procedure are being studied. In CB-BFR and CF-BFR, the UE may transmit a preamble (which is also referred to as an RA preamble, a random access channel (Physical Random Access Channel (PRACH)) or RACH preamble, or the like) as a BFRQ using a PRACH resource.

In NR, multiple PRACH formats (PRACH preamble formats) are being studied. Random Access (RA) preambles using the PRACH formats include a RACH OFDM symbol. Further, the RA preambles may include at least one of a cyclic prefix (CP) and a guard period (GP). For example, PRACH formats 0 to 3 use a long sequence preamble sequence in the RACH OFDM symbol. PRACH formats A1 to A3, B1 to B4, C0, and C2 use a short sequence preamble sequence in the RACH OFDM symbol.

The frequency of an unlicensed carrier may be within the frequency range of either frequency range (FR) 1 or FR2. FR1 may be a frequency range lower than a given frequency, and FR2 may be a frequency range higher than a given frequency.

The RA preamble sequence may be a Zadoff-Chu (ZC) sequence. The preamble sequence length may be either 839 (a long sequence) or 139. The preamble sequence may be mapped to frequency resources (e.g., subcarriers) allocated to the PRACH. The RA preamble may use one of multiple numerologies. Subcarrier spacing (SCS) for the long sequence of FR1 in NR may be either 1.25 or 5 kHz. SCS for the short sequence of FR1 in NR may be either 15 or 30 kHz. SCS for the short sequence of FR2 in NR may be either 60 or 120 kHz. SCS for the long sequence in LTE may be 1.25 kHz. SCS for the short sequence in LTE may be 7.5 kHz.

In CB-BFR, the UE may transmit a preamble randomly selected from one or more preambles. On the other hand, in CF-BFR, the UE may transmit a preamble uniquely assigned to the UE from the base station. In CB-BFR, the base station may assign the same preamble to a plurality of UEs. In CF-BFR, the base station may assign preambles to UEs, individually.

CB-BFR and CF-BFR may be referred to as contention-based PRACH-based BFR (CBRA-BFR) and contention-free PRACH-based BFR (CFRA-BFR), respectively. CBRA-BFR may be referred to as CBRA for BFR. CFRA-BFR may be referred to as CFRA for BFR.

In either CB-BFR or CF-BFR, information about a PRACH resource (RA preamble) may be reported by, for example, higher layer signaling (such as RRC signaling). For example, the information may include information indicating a correspondence relationship between a detected DL-RS (beam) and a PRACH resource. Different PRACH resources may be associated with different DL-RSs.

In step S105, the base station that has detected the BFRQ transmits a response signal to the BFRQ from the UE (which may be referred to as a gNB response or the like). The response signal may include reconfiguration information (e.g., DL-RS resource configuration information) on one or more beams.

The response signal may be transmitted, for example, in a UE common Search Space of a PDCCH. The response signal may be reported using a PDCCH (DCI) with a cyclic redundancy check (CRC) scrambled by the identifier of the UE (e.g., a cell-radio RNTI (C-RNTI)). The UE may determine at least one of a transmission beam and a reception beam to use, based on the beam reconfiguration information.

The UE may monitor the response signal based on at least one of a control resource set (CORESET) for BFR and a Search Space set for BFR.

For CB-BFR, it may be determined that contention resolution has succeeded when the UE receives a PDCCH corresponding to the C-RNTI related to itself.

For the processing of step S105, a period for the UE to monitor a response from the base station (e.g., the gNB) to the BFRQ may be configured. The period may be referred to as, for example, a gNB response window, a gNB window, a beam recovery request response window, a BFRQ response window, or the like. The UE may retransmit the BFRQ if no gNB response has been detected within the window period.

In step S106, the UE may transmit a message indicating that beam reconfiguration has been completed to the base station. The message may be transmitted by a PUCCH or a PUSCH, for example.

A beam recovery success (BR success) may represent a case where step S106 has been reached, for example. On the other hand, a beam recovery failure (BR failure) may correspond to, for example, a case where the BFRQ transmission has reached a given number of times, or a Beam-failure-recovery-Timer has expired.

Note that the numbers of these steps are merely numbers for explanation. Two or more steps may be combined or may be changed in order. Further, whether or not to perform BFR may be configured for the UE using higher layer signaling.

By the way, as described above, in existing LTE systems, it has been specified that BFR is performed only on a given cell (e.g., a primary cell) when communication is performed using multiple cells, whereas in NR, it is being studied to apply a BFR procedure to multiple cells.

However, when a BFR procedure is performed on multiple cells, it becomes a problem how to control an operation such as a BFRQ report or a response to the report from the base station. When a BFR procedure is performed on multiple cells, deterioration of communication quality or the like may occur if a BFRQ report, a response to the report, or the like is not properly controlled.

Therefore, the present inventors have arrived at the idea of performing a BFR procedure (e.g., at least one of transmission of a BFRQ and reception of a BFRQ response) in a given cell configured in advance or a cell in which a BF has occurred. This allows the BFR procedure to be performed properly, preventing deterioration of communication quality.

Hereinafter, embodiments according to the present disclosure will be described in detail with reference to the drawings. The following aspects may be applied singly or in combination.

### (First aspect)

In a first aspect, if a beam failure (BF) has occurred in a configuration to perform communication using multiple cells (e.g., CA), a beam recovery request (also referred to as a BFRQ) is transmitted, using a random access channel (e.g., a PRACH) in a given cell configured in advance or a cell in which the BF has occurred.

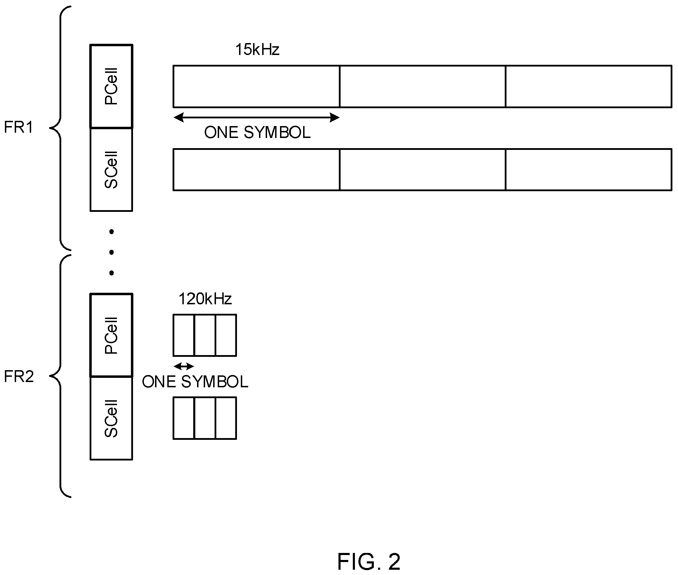

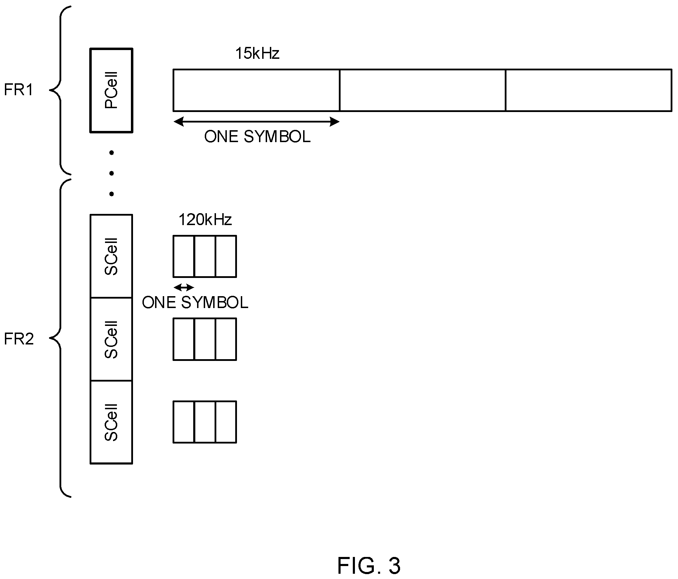

The configuration to perform communication using multiple cells is, for example, intra-band carrier aggregation (CA) or inter-band carrier aggregation (CA). Fig. 2 shows an example of a case where intra-band CA is applied. Fig. 3 shows an example of a case where inter-band CA is applied.

Figs. 2 and 3 show a case where at least one frequency range (carrier frequency) of a first frequency range (frequency range 1 (FR1)) and a second frequency range (frequency range 2 (FR2)) is used as multiple frequency bands. Note that the number of frequency bands applied is not limited to two. The frequency band (or frequency domain) may be divided into three or more.

For example, FR1 may be a frequency range of 6 GHz and less (sub-6 GHz), and FR2 may be a frequency range higher than 24 GHz (above-24 GHz). FR1 may be defined as a frequency range in which at least one of 15, 30, and 60 kHz is used as the subcarrier spacing (SCS). FR2 may be defined as a frequency range in which at least one of 60 and 120 kHz is used as the SCS. Note that the frequency ranges, definitions, etc. of FR1 and FR2 are not limited to these. For example, FR1 may be a frequency range higher than FR2.

For example, a cell using FR1 and a cell using FR2 may be configured to apply different numerologies (e.g., subcarrier spacings or the like). Figs. 2 and 3 show, as an example, a case where the subcarrier spacing (SCS) applied by cells included in FR1 is 15 kHz, and the subcarrier spacing applied by cells included in FR2 is 120 kHz. Note that cells included in the same frequency band may use different numerologies.

Fig. 2 shows a case where CA is applied to each frequency band. In this case, CA is applied among multiple cells included in FR1. That is, the cells to which CA is applied may be limited to cells included in the same frequency band. In this case, a specific cell included in FR1 may be set as a primary cell, and a specific cell included in FR2 may be set as a primary cell (or a PSCell).

Fig. 3 shows a case where CA is applied across multiple frequency bands. In this case, CA is applied among one or more cells included in FR1 and one or more cells included in FR2. In this case, a specific cell included in FR1 or FR2 may be set as a primary cell. Fig. 3 shows a case where a cell included in FR1 is set as a primary cell.

If a beam failure (BF) occurs in a cell in a configuration using multiple cells (see, for example, Figs. 2 and 3), a UE performs a beam recovery (BFR) procedure. For example, the UE transmits a beam recovery request (also referred to as a BFRQ) using a PRACH in a given cell configured in advance or the cell in which the BF has occurred (or a cell in which the BF has been detected).

The given cell may be a fixed cell defined in advance by specifications, or may be a cell configured for the UE from the network (e.g., the base station). The fixed cell may be a primary cell (PCell) or a specific SCell.

### <Using fixed cell>

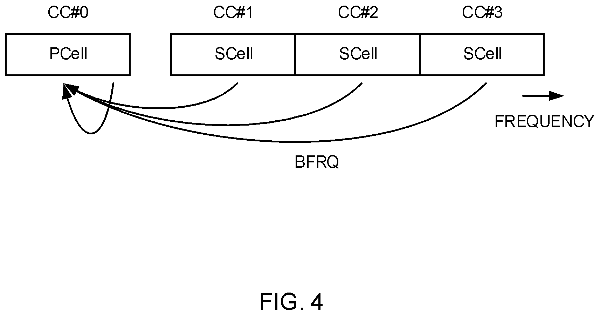

When the given cell is a fixed cell (e.g., a PCell), the UE transmits a BFRQ to the PCell when a BF has occurred in one of the cells (see Fig. 4). A random access channel (e.g., a PRACH) may be used to transmit the BFRQ.

Fig. 4 shows a case where CC #0 is a PCell, and CCs #1 to #3 are SCells. In this case, if a BF occurs in one of CC #1 to CC #3, the UE controls to transmit a BFRQ using the PRACH of CC #0.

This configuration to perform BFRQ transmission using a cell different from a cell in which a BF has occurred (or a cell in which BFR is required) allows an increase in the success probability of BFRQ transmission. The fixed cell may be a PSCell or a PUCCH SCell.

### <Using specified given cell>

If the given cell is a cell configured for the UE from the network (e.g., the base station), the UE transmits a BFRQ to the given cell configured from the base station when a BF has occurred (or a BF has been detected) in one of the cells. A random access channel (e.g., a PRACH) may be used to transmit the BFRQ.

The given cell configured from the base station may be a primary cell, a PSCell, a PUCCH SCell, or a SCell. The base station may use a higher layer (e.g., RRC signaling) to configure a cell to perform BFRQ transmission for the UE. For example, the base station may include information about a cell used for BFRQ transmission (e.g., a cell index) in given higher layer parameters (e.g., BeamFailureRecoveryConfig) and transmit it to the UE.

Note that the given higher layer parameters (e.g., BeamFailureRecoveryConfig) may include at least one of information on a RACH configuration used for BFRQ transmission, information on a list of reference signal (e.g., at least one of CSI-RS and SSB) candidates indicating candidate beams for recovery, information on a Search Space used for a response to a BFR, and information on the number of SSBs per RACH occasion. Of course, other information may be included.

The UE determines a given cell in which to transmit a BFRQ, based on the given higher layer parameters reported from the base station, and controls the BFR procedure (such as BFRQ transmission using a PRACH) in the given cell. This configuration to perform BFRQ transmission in a cell configured from the base station enables flexible control of the BFR procedure (such as BFRQ transmission).

Note that the case where the BFR procedure is performed on each cell (or CC) has been described, which is not limiting. The BFR procedure may be performed in units of bandwidth parts (BWPs). For example, one BWP or a plurality of BWPs may be configured in a cell (or CC). In this case, the UE may be notified of given higher layer parameters (e.g., BeamFailureRecoveryConfig) for each BWP configured in a cell.

### <Using cell in which BF has occurred>

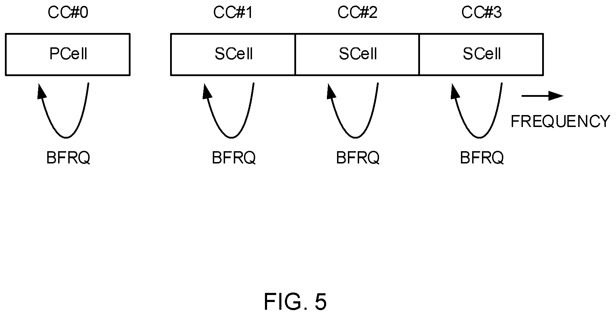

When a BF has occurred in one of the cells, the UE transmits a BFRQ to the cell in which the BF has occurred (e.g., the cell that requires BFR) (see Fig. 5). The BFRQ transmission may use a random access channel (e.g., a PRACH) to which a candidate beam is applied.

Fig. 5 shows a case where CC #0 is a PCell, and CCs #1 to #3 are SCells. In this case, when a BF has occurred, the UE controls to transmit a BFRQ using the PRACH of a CC in which the BF has been detected.

This configuration to perform BFRQ transmission using a cell in which a BF has occurred (or a cell that requires BFR) can prevent concentration of BFRQ transmission in a given cell.

### <PRACH sequence/resource of BFRQ>

When a BF has occurred, the UE performs PRACH transmission to report BFR (transmit a BFRQ). In this case, the UE performs the PRACH transmission using a given PRACH sequence and PRACH resource. The PRACH resource may be at least one of a time resource and a frequency resource included in the range of a PRACH transmission candidate region (also referred to as a PRACH occasion, for example) configured for PRACH transmission. In the following description, a PRACH resource and a PRACH occasion may be replaced with each other.

The UE transmits a PRACH using a PRACH resource (or a PRACH occasion) corresponding to a given reference signal (BFR-RS) received. In this case, in beam transmission/reception between the base station and the UE, a transmission method using a beam may be properly controlled, depending on whether or not a beam (Tx BF) applied to transmission and a beam (Rx BF) applied to reception by the base station (or the UE) match.

If a beam applied to transmission and a beam applied to reception in the base station or the like match, the base station or the like may be said to have (support) beam correspondence. On the other hand, if a beam applied to transmission and a beam applied to reception do not match, the base station or the like may be said not to have (not to support) beam correspondence.

Matching of a beam applied to transmission and a beam applied to reception is not limited to a case of perfect matching, and includes a case of matching within a given allowable range. Beam correspondence may be referred to as transmission/reception beam correspondence (Tx/Rx beam correspondence), beam reciprocity, beam calibration, calibrated/non-calibrated, reciprocity calibrated/non-calibrated, a correspondence degree, a matching degree, simply correspondence, or the like.

If the base station has beam correspondence, a beam applied to the transmission of a DL signal/channel at the base station matches a beam applied to the reception of a UL signal transmitted from the UE. Therefore, the base station can determine a beam suitable for transmission/reception to/from a UE by grasping a DL signal/channel (or a beam) having high reception characteristics (e.g., received power) at the UE.

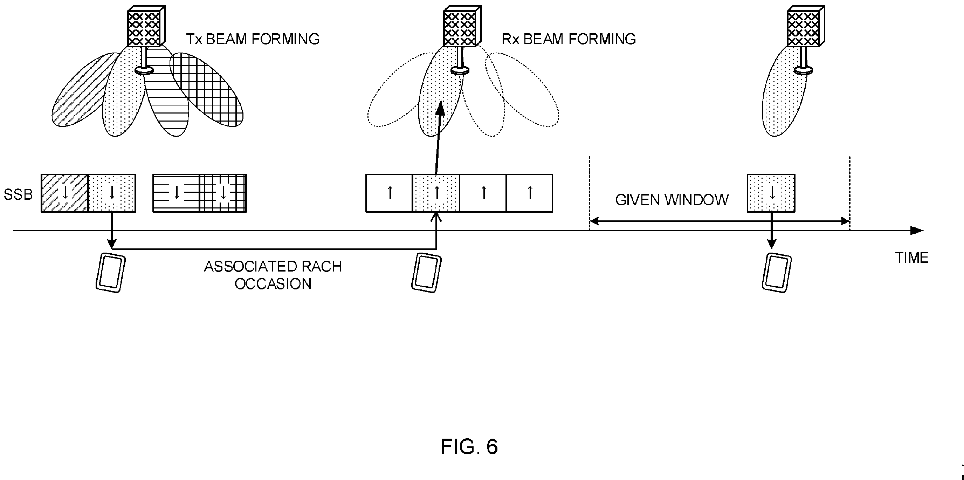

For example, the base station transmits multiple synchronization signal blocks (SSBs) or CSI-RSs, using different DL resources (or DL beams) in the time direction (see Fig. 6). The UE may select a given SSB based on the reception characteristics (e.g., received power) or the like, and perform PRACH transmission using a RACH occasion (or a UL resource or a UL beam) associated with the given SSB.

The base station performs reception processing on UL resources associated with the SSBs, individually, and determines a given beam suitable for the DL and the UL based on the UL resource used for the transmission from the UE.

On the other hand, if the base station does not have beam correspondence, a beam applied to transmission of a DL signal/channel at the base station does not match (link to) a beam applied to the reception of a UL signal/channel transmitted from the UE. The base station can determine a beam suitable for DL transmission by grasping a DL signal/channel having high reception characteristics (e.g., received power) at the UE. Further, the base station can determine a beam suitable for UL reception by grasping a UL signal/channel (or a beam) having high reception characteristics, of UL signals/channels transmitted from the UE.

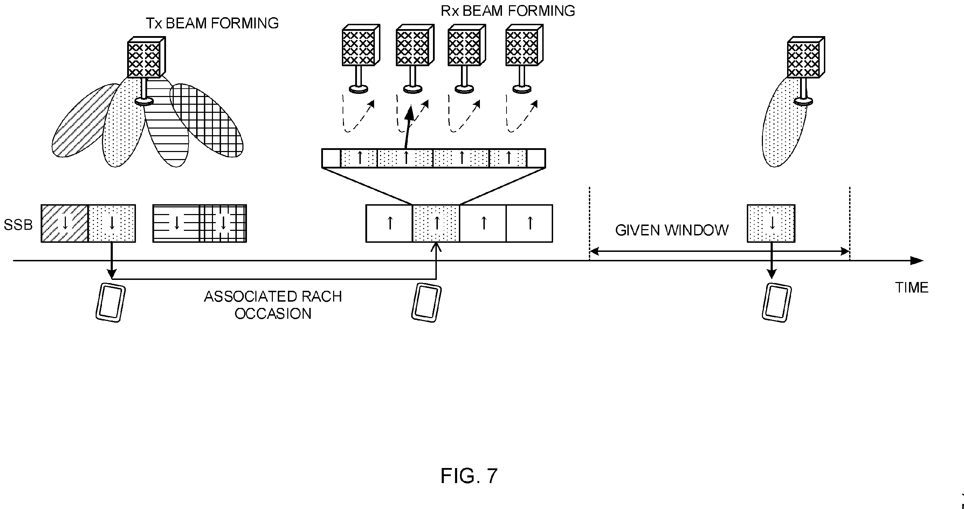

For example, the base station transmits multiple SSBs or CSI-RSs using different DL resources (or DL beams) in the time direction (see Fig. 7). The UE selects a given SSB based on the reception characteristics (e.g., received power) or the like, and performs PRACH transmission using a RACH occasion (or a UL resource or a UL beam) associated with the given SSB.

The base station performs reception processing on UL resources associated with the SSBs, individually, and determines a given transmission beam suitable for the DL based on the UL resource used for the transmission from the UE. Further, the base station determines a given reception beam suitable for the UL based on the reception characteristics of a UL signal transmitted at given periods (e.g., at each symbol) in the UL resource associated with the given SSB.

Thus, the UE may perform PRACH transmission for a BFRQ using a PRACH resource (e.g., a time resource) associated with a reference signal (e.g., an SSB index or a CSI-RS index) received in the BFR procedure.

On the other hand, if BFRQ transmission is performed in a given cell (e.g., a fixed cell or a specified given cell), a case can arise where a cell in which a BF has been detected based on a BFD-RS and a cell in which BFRQ transmission is performed have different numerologies. For example, a first subcarrier spacing (e.g., a SCS of 30 kHz or higher) may be applied in a cell in which a BF has occurred, and a second subcarrier spacing (e.g., a SCS of 15 kHz) may be applied in a cell in which BFRQ transmission is performed.

In particular, when inter-band CA is applied, a case is expected where BFRQ transmission for a BF that has occurred in a CC included in F2 is performed in a CC included in F1 (see, for example, Fig. 3). Thus, the possibility that the SCS applied in a given cell in which BFRQ transmission is performed is different from the SCS applied in a cell in which a BF has occurred may be higher in inter-band CA.

Further, the maximum number L of SSBs that can be transmitted within a single BFD-RS (e.g., SSB) transmission period may be determined according to the frequency band. For example, L in a 0 to 3 GHz frequency band may be four, L in a 3 to 6 GHz frequency band may be eight, and L in a 6 to 52.6 GHz frequency band may be sixty-four. The SSB transmission period may be configured to one of 5, 10, 20, 40, 80, and 160 ms. Thus, the SS block index may be configured based on the applied frequency band (or frequency domain).

For example, assume a case where BFRQ transmission for a BF that has occurred in a CC included in F2 (e.g., CC #3) is performed in a CC included in F1 (e.g., CC #0) (see Figs. 3 and 4). Here, assume a case where the SCS of CC #0 is 15 kHz, the SCS of CC #3 is 120 kHz, the SSB maximum number L applied in CC #0 is four, and the SSB maximum number L applied in CC #3 is sixty-four.

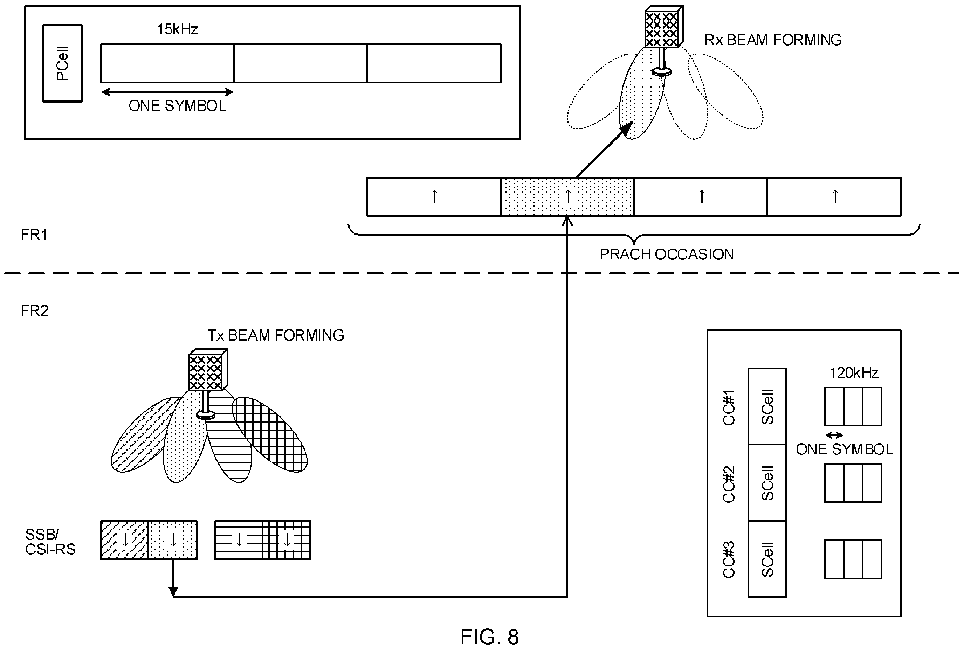

If the PRACH for a BFRQ on CC #3 is transmitted to CC #3, PRACH resources (e.g., time resources) corresponding to SSB indexes 0 to 63 are configured in CC #3 with a SCS of 120 kHz. On the other hand, when the PRACH for a BFRQ on CC #3 is transmitted to CC #0, PRACH resources (e.g., time resources) corresponding to SSB indexes 0 to 63 are configured in CC #0 with a SCS of 15 kHz (see Fig. 8).

When sixty-four PRACH resources (e.g., time resources) are configured in CC #0 having a longer symbol length than CC #3, a delay occurs in PRACH transmission. Consequently, the throughput of the BFR procedure can decrease, deteriorating communication quality.

Therefore, in the present embodiment, when BFRQ transmission for a first cell in which a BF has occurred is performed using a second cell having a different numerology, PRACH transmission conditions (or transmission parameters) are changed.

For example, assume a case where a subcarrier spacing applied in the first cell in which a BF has occurred is wider than a subcarrier spacing applied in a given cell (or the second cell) in which to perform PRACH transmission for a BFRQ. As an example, the subcarrier spacing applied in the first cell in which the BF has occurred may be 120 kHz, and the subcarrier spacing applied in the second cell in which a PRACH for a BFRQ is transmitted may be 15 kHz. Of course, the values of the subcarrier spacings applicable to the cells are not limited to these.

In such a case, the number of PRACH resources (e.g., time resources) applied in the PRACH transmission in the second cell is configured to be smaller than the number of reference signal indexes that can be configured in the first cell or the number of PRACH resources corresponding to the reference signal indexes of the first cell. The PRACH resources (e.g., time resources) may be resources (also referred to as time resources) in the time domain used for PRACH transmission, and may be configured in units of given periods (e.g., symbols).

The reference signal indexes may be SSB indexes or CSI-RS indexes. For example, if SSB indexes applied in the first cell is SSB #0 to #63, the number of reference signal indexes equals to sixty-four.

For example, when performing, in the second cell, PRACH transmission for a BFRQ on a BF detected in the first cell, the UE applies PRACH time resources configured to be smaller than the number of reference signal indexes applicable in the first cell (e.g., sixty-four).

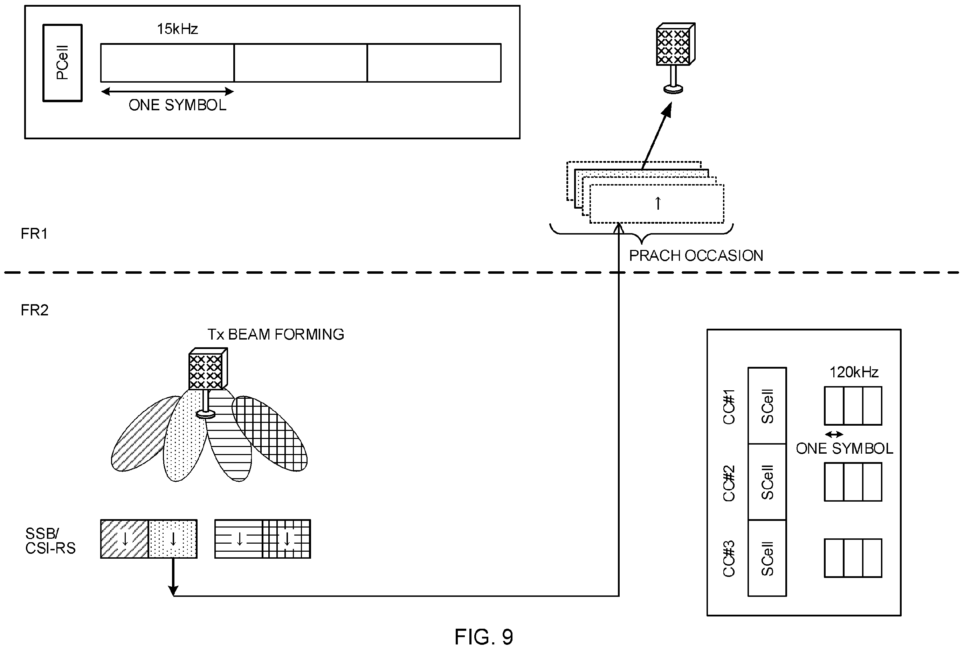

Fig. 9 shows a case where one PRACH resource (e.g., time resource) is configured in the second cell. That is, one time resource is configured in a PRACH occasion. In this case, digital beam forming (digital BF) may be applied instead of applying analog beam forming (analog BF).

On the other hand, PRACH resources corresponding to the number of reference signal indexes applicable in the first cell (e.g., sixty-four) may be configured, using at least frequency resources or sequences applied to PRACH transmission.

That is, when PRACH transmission for a BFRQ on the first cell is performed in the second cell, combinations of time resources, frequency resources, and sequences applied in PRACH transmission in the second cell may be associated with reference signal indexes in the first cell.

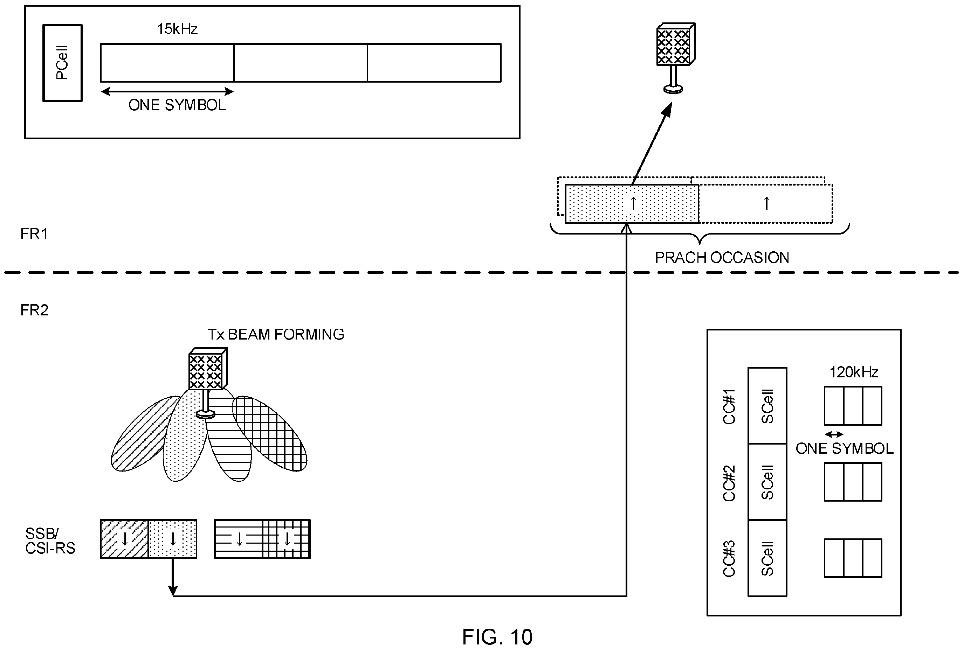

Note that the number of PRACH resources (e.g., time resources) configured in the second cell is not limited to one. For example, as shown in Fig. 10, the number of PRACH resources (e.g., time resources) configured in the second cell may be two or more. In this case, analog BF may be applied. Alternatively, the number of PRACH resources (e.g., time resources) configured in the second cell may be set to the number of reference signal indexes (e.g., four) in the second cell.

Thus, when the subcarrier spacing of a cell in which a BF has been detected is different from that of a cell in which a BFRQ on the BF is transmitted, PRACH time resources are configured to be smaller, so that delay in the BFR procedure can be prevented and deterioration of communication quality can be prevented. The PRACH time resource adjustment shown in Figs. 9 and 10 may be performed only on inter-band CA. Alternatively, even when intra-band CA is applied, the PRACH time resource adjustment shown in Figs. 9 and 10 may be performed if different subcarrier spacings are applied in different cells.

### <Associations between reference signal indexes and PRACH occasions>

The UE may control associations between reference signal indexes (e.g., SSB indexes or CSI-RS indexes) of the first cell and PRACH resources (or PRACH occasions) based on a given rule. For example, the UE may determine the correspondence between an SSB index and a PRACH occasion based on at least one of a preamble sequence, a frequency resource index, a time resource index, and the index of a PRACH slot.

As an example, reference signal indexes may be associated with PRACH occasions based on the following order (1) to (4).
Order (1): Set preamble indexes in ascending order within one PRACH occasion
Order (2): Set frequency resource indexes in ascending order for frequency-multiplexed PRACH occasions
Order (3): Set time resource indexes in ascending order for PRACH occasions time-multiplexed in a PRACH slot
Order (4): Set indexes in ascending order for PRACH slots

The UE may perform PRACH transmission using a PRACH resource corresponding to a given reference signal index (e.g., an SSB index corresponding to a new candidate beam). Thus, the base station may determine the new candidate beam based on the PRACH resource transmitted from the UE.

### (Second aspect)

In a second aspect, when BFRQ transmission on a cell in which a beam failure (BF) has occurred is performed in a configuration to perform communication using multiple cells (e.g., CA), a response to the BFRQ is made in a given cell configured in advance or the cell in which the BF has occurred. The response to the BFRQ is also referred to as a BFRQ answer, a BFRQ response, or a BFRQR.

If a BF has occurred in a cell in a configuration using multiple cells (see, for example, Figs. 2 and 3), the UE performs a BFR procedure. In the BFR procedure, the UE that has transmitted a BFRQ receives a BFRQ response (BFRQR) corresponding to a response signal to the BFRQ. The UE receives the BFRQ response in a given cell configured in advance or the cell in which the BF has occurred (or a cell in which the BFRQ has been transmitted).

The given cell may be a fixed cell defined in advance by specifications, or may be a cell configured for the UE from the network (e.g., the base station). The fixed cell may be a primary cell (PCell) or a specific SCell.

### <Using fixed cell>

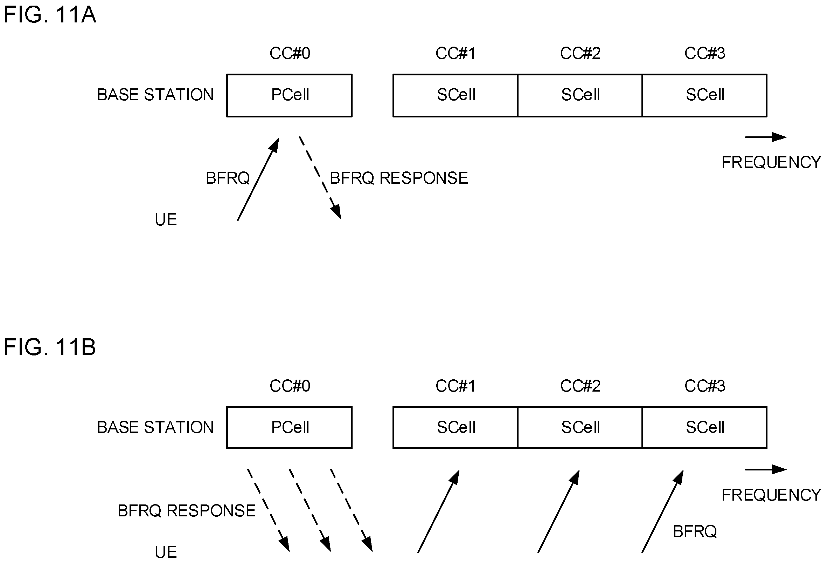

If the given cell is a primary cell (PCell), the UE receives a response signal to a BFRQ transmitted in one of the cells in the PCell (see Fig. 11). The reception of the BFRQ response may use a given DL channel (e.g., a PDSCH scheduled by given DCI or the like).

Fig. 11 shows a case where CC #0 is a PCell, and CCs #1 to #3 are SCells. In this case, the UE controls to receive a response signal to a BFRQ transmitted in one of CC #0 to CC #3 in CC #0. Fig. 11A shows a case where the UE receives a response signal to a BFRQ transmitted in CC #0 in CC #0. Fig. 11B shows a case where the UE receives response signals to BFRQs transmitted in CCs #1 to #3 in CC #0.

Thus, by receiving a BFRQ response using a fixedly configured cell, the UE only needs to perform reception processing of the BFRQ response (e.g., monitoring) only on the fixedly configured cell, so that its reception processing load can be reduced.

Fig. 11 shows the case where the fixedly configured cell is a PCell, which is not limiting. A specific SCell (e.g., a PSCell or a PUCCH SCell) may be used as a fixed cell.

### <Using specified given cell>

When the given cell is a cell configured for the UE from the network (e.g., the base station), the UE receives a response signal to a BFRQ transmitted in one of the cells in the given cell configured from the base station.

The given cell configured from the base station may be a primary cell, a PSCell, or an SCell. The base station may use a higher layer (e.g., RRC signaling) to configure a cell in which to receive a BFRQ response for the UE. For example, the base station may include information about a cell used for BFRQ response reception (e.g., a cell index) in given higher layer parameters (e.g., BeamFailureRecoveryConfig) and transmit it to the UE.

Note that the given higher layer parameters (e.g., BeamFailureRecoveryConfig) may include at least one of information about a cell used for BFRQ transmission, information on a RACH configuration used for BFRQ transmission, information on a list of reference signal (e.g., at least one of CSI-RS and SSB) candidates indicating candidate beams for recovery, information on a Search Space used for a response to a BFR, and information on the number of SSBs per RACH occasion. Of course, other information may be included.

The UE determines a given cell in which to receive a BFRQ response, based on the given higher layer parameters reported from the base station, and controls the BFR procedure (such as reception of a response signal to the BFRQ) in the given cell. This configuration to receive a BFRQ response in a cell configured from the base station enables flexible control of the BFR procedure.

Note that the case where the BFR procedure is performed on each cell (or CC) has been described, which is not limiting. The BFR procedure may be performed in units of bandwidth parts (BWPs). For example, one BWP or a plurality of BWPs may be configured in a cell (or CC). In this case, the UE may be notified of given higher layer parameters (e.g., BeamFailureRecoveryConfig) for each BWP configured in a cell.

### <Using BFRQ transmission cell>

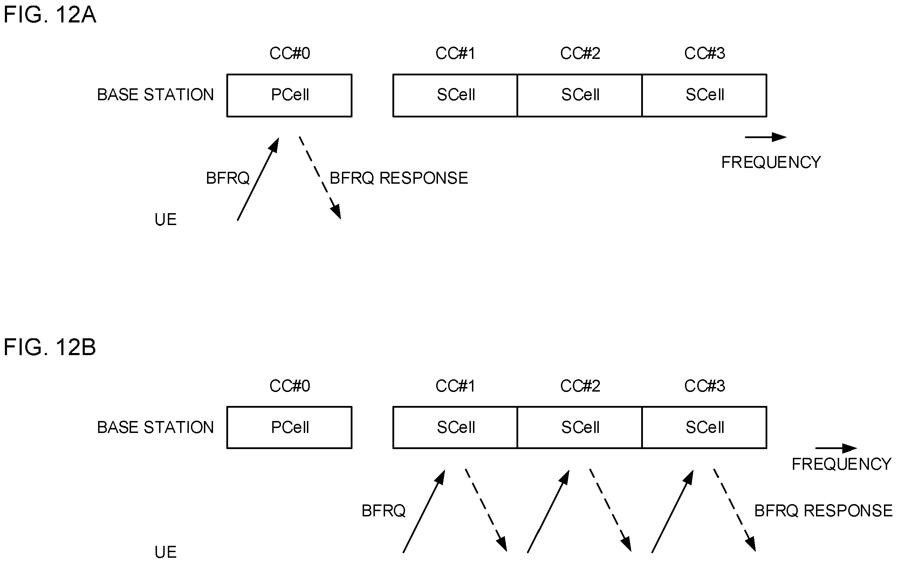

When the UE transmits a BFRQ using one of the cells, the UE receives a response signal to the BFRQ in the cell in which the BFRQ has been transmitted (see Fig. 12). The reception of the BFRQ response may use a given DL channel (e.g., a PDSCH scheduled by given DCI or the like).

Fig. 12 shows a case where CC #0 is a PCell, and CCs #1 to #3 are SCells. In this case, the UE controls to receive a response signal to a BFRQ transmitted in one of CC #0 to CC #3 in the CC in which the BFRQ has been transmitted. Fig. 12A shows a case where the UE receives a response signal to a BFRQ transmitted in CC #0 in CC #0. Fig. 12B shows a case where the UE receives response signals to BFRQs transmitted in CCs #1 to #3 in the CCs in which the BFRQs have been transmitted, respectively.

This configuration to receive a BFRQ response using a cell in which a BFRQ has been transmitted can prevent concentration of BFRQ response reception in a given cell.

### <Reception of BFRQ response>

When the UE receives a BFRQ response in a cell specified from the base station or a cell in which a BFRQ has been transmitted, the BFRQ response is received in one of a primary cell, a specific secondary cell (e.g., a PSCell or a PUCCH SCell), and a secondary cell. In this case, the UE monitors a downlink shared channel (PDSCH) in a given Search Space to detect a DCI format CRC-scrambled by a given RNTI. The given RNTI may be a C-RNTI or a RA-RNTI.

The base station may notify the UE of information about a given Search Space to be monitored by the UE (e.g., a Search Space index), using a higher layer (such as RRC signaling). For example, the base station may notify the UE of a recovery Search Space ID using a higher layer parameter (e.g., recoverySearchSpaceID) that specifies a Search Space index applied to the recovery of the BFR procedure. The higher layer parameter may be configured for each cell. Further, a control resource set ID in which a Search Space is configured may be configured for each cell.

When receiving a BFRQ response in a fixed cell (e.g., a PCell), the UE may assume that a higher layer parameter for recovery (e.g., RecoverySearchSpaceID in BeamFailureRecoveryConfig) configured for a given SCell (e.g., a PSCell or a PUCCH SCell) is applied to a Search Space for a BFRQ response in the PCell.

Alternatively, the UE may ignore a higher layer parameter for recovery configured for a given SCell, or may assume that a higher layer parameter for recovery is not configured for a SCell.

Consequently, even when a parameter for a BFRQ response (such as a Search Space ID or a control resource set ID) is configured for each cell, the UE can properly control monitoring.

### <BFRQ response window>

A given period for receiving a response signal (a BFRQ response) to the transmission of a BFRQ may be configured. The given period may be referred to as a BFRQ response window, a recovery PRACH window, or the like. After transmitting a BFRQ, the UE monitors a recovery Search Space in a BFRQ response window to detect a BFRQ response.

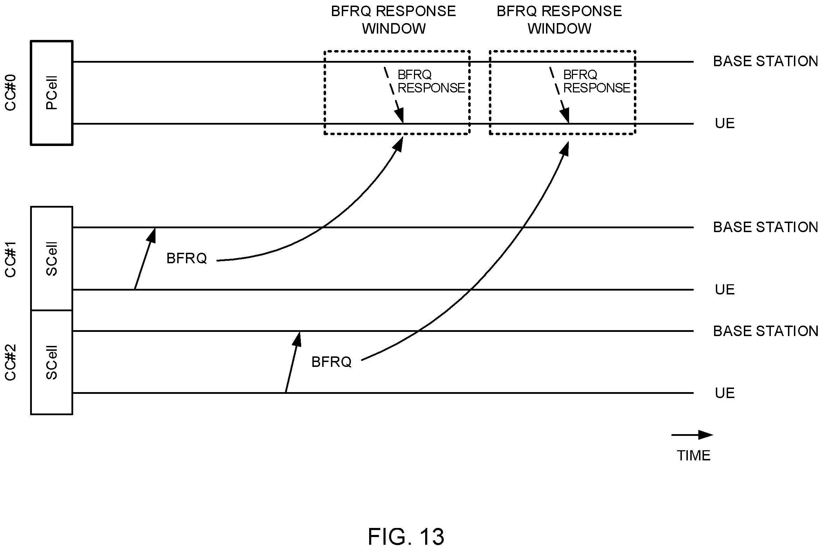

A BFRQ response window may be configured for each BFRQ transmission (see Fig. 13). Fig. 13 shows a case where BFRQ responses are received in CC #0 constituting a PCell, to BFRQs transmitted in CC #1 and CC #2 constituting SCells, respectively. In this case, a BFRQ response window is configured for each BFRQ in the PCell.

The starting position, period, etc. of a BFRQ response window may be defined in advance by specifications, or the base station may notify the UE of them in advance. If a BFRQ response cannot be detected in a BFRQ response window, the UE may retransmit the PRACH.

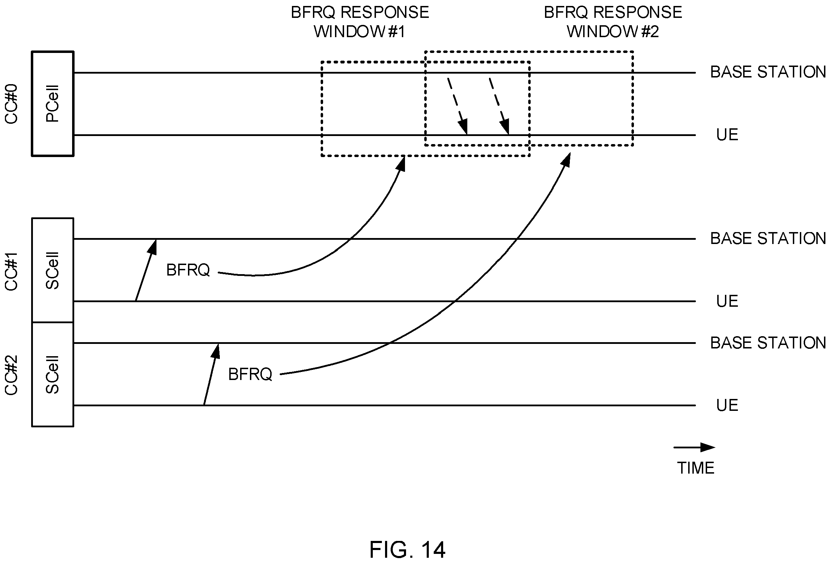

When BFRQ responses are received in a given cell, BFRQ response windows configured for different BFRQs may overlap (see Fig. 14). Fig. 14 shows an example of a case where BFRQ response window #1 for a first BFRQ (e.g., a BFRQ in CC #1) and BFRQ response window #2 for a second BFRQ (e.g., a BFRQ in CC #2) overlap.

In this case, if the UE receives only one BFRQ response in an overlap period in periods during which BFRQ response windows #1 and #2 are configured, the UE may not be able to determine to which BFRQ the response signal is.

Therefore, when BFRQ windows for multiple BFRQs overlap, the UE may control not to monitor at least part of the BFRQ response windows (a first monitoring operation), or to monitor the BFRQ response windows (a second monitoring operation).

### <First monitoring operation>

When BFRQ windows for multiple BFRQs overlap, the UE may control not to monitor part or all of the BFRQ response windows. For example, the UE controls not to monitor a PDCCH (or DCI) on an overlap portion of the multiple BFRQ response windows. Consequently, the UE can properly determine to which BFRQ a received BFRQ response corresponds. The base station may control not to transmit a BFRQ response in an overlap portion of multiple BFRQ response windows.

Alternatively, when BFRQ windows for multiple BFRQs overlap, the UE may control not to monitor the entire overlapping BFRQ response windows. For example, in Fig. 14, the UE may control not to monitor BFRQ response window #1 for the first BFRQ and BFRQ response window #2 for the second BFRQ.

### <Second monitoring operation>

When BFRQ response windows for multiple BFRQs overlap, the UE controls to monitor a PDCCH (or DCI) in periods during which the BFRQ response windows are configured.

When the UE receives one BFRQ response in an overlap portion of the BFRQ response windows, the UE may assume that the BFRQ response is a response signal to a given BFRQ transmission. For example, when the UE receives one BFRQ response in the overlap portion, the UE may determine that the BFRQ response is to a BFRQ transmitted first. Alternatively, when the UE receives one BFRQ response in the overlap portion, the UE may determine that the BFRQ response is to a BFRQ transmitted later (or the latest).

Alternatively, when the UE receives one BFRQ response in the overlap portion, the UE may assume that the BFRQ response is to a BFRQ transmitted from a CC having a relatively small (or large) CC index.

When the UE has received multiple (e.g., two in Fig. 14) BFRQ responses in an overlap portion of BFRQ response windows, the UE may determine that response signals to the respective BFRQ transmissions have been received. Alternatively, even when the UE has received one BFRQ response in the overlap portion of the BFRQ response windows, if the UE has received a BFRQ response in a portion other than the overlap portion, the UE may determine that response signals to the respective BFRQ transmissions have been received.

Alternatively, the UE may control to monitor at least one of a given Search Space and a control resource set in the overlap portion of the BFRQ response windows. The given Search Space may be a Search Space associated with a specific BFRQ transmission. The given control resource set may be a control resource set associated with a specific BFRQ transmission.

For example, the UE may control to monitor only a given Search Space index (e.g., a Search Space with a high (or low) index) or a given control resource set index (e.g., a control resource set with a high (or low) index). The Search Space to be monitored may be limited to either a common Search Space or a UE-specific Search Space.

Consequently, even when the UE monitors an overlap portion of BFRQ response windows, the UE can properly determine to which BFRQ a response signal received corresponds.

Alternatively, multiple BFRQ response windows may be configured not to overlap. The UE may assume that in a period during which one BFRQ process (e.g., BFRQ transmission and BFRQ response reception to the BFRQ transmission) is performed, no other BFRQ process is performed. In this case, the UE may transmit another BFRQ using the next PRACH occasion (e.g., by delaying transmission timing).

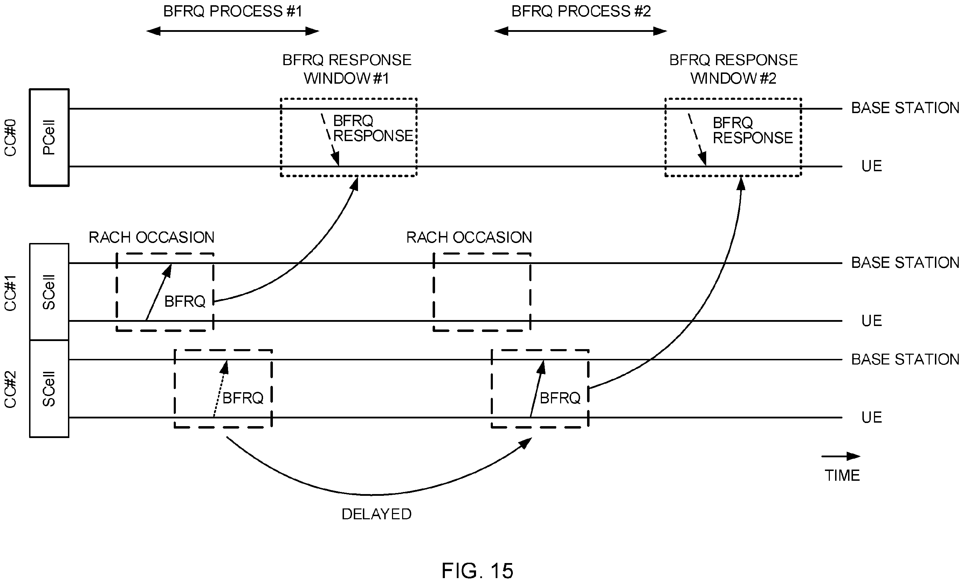

Fig. 15 shows a case where when BFRQ response windows for BFRQ transmissions in CC #1 and CC #2 overlap, the timing of one BFRQ transmission is delayed. Here, the timing of the BFRQ transmission in CC #2, which is later than that in CC #1, is delayed. For example, the BFRQ transmission in CC #2 may be delayed until the next PRACH occasion, to be performed. The priority of a BFRQ transmission may be determined based on the cell type (e.g., the cell index) or the like.

Alternatively, when PRACH occasions for BFRQ transmissions in CC #1 and CC #2 overlap, the UE may assume that BFRQ response windows will overlap, and control to delay the timing of one BFRQ transmission.

Thus, by controlling to prevent overlapping of multiple BFRQ response windows, the UE can properly receive BFRQ responses to the corresponding BFRQs.

### <Variations>

A reference signal (BFR-RS) for detecting a BFR may be configured for each CC. For example, if the number of CCs (N) which perform DL (such as BFR-RS transmission) is greater than the number of CCs (M) which perform UL (BFRQ transmission), the UE measures a BFR-RS to detect a BFR for each CC. In this case, if the UE detects a BFR based on a measurement result, the UE transmits a BFRQ using the specific M CCs.

A PRACH resource for BFRQ transmission may be configured for each CC. Alternatively, it may be configured for each BFR-RS. When BFRs are detected in multiple CCs at the same time, either the first monitoring operation or the second monitoring operation may be performed.

A UE for which beam reporting based on at least one of L1-RSRQ and SINR (L1-RSRQ/SINR beam reporting) is configured may use L1-RSRQ/SINR to search for a new beam (or a new candidate beam) in the BFR procedure. On the other hand, if L1-RSRQ/SINR beam reporting is not configured, the UE may use L1-RSRP to search for a new beam in the BFR procedure.

The use of L1-RSRQ/SINR may be limited to a PCell, and SCells may use L1-RSRP at all times. Alternatively, the use of L1-RSRQ/SINR may be limited to SCells, and a PCell may use L1-RSRP at all times.

### (Radio communication system)

A configuration of a radio communication system according to an embodiment of the present disclosure will be described below. In the radio communication system, communication is performed using at least one of or a combination of the radio communication methods described in the above-described embodiments.

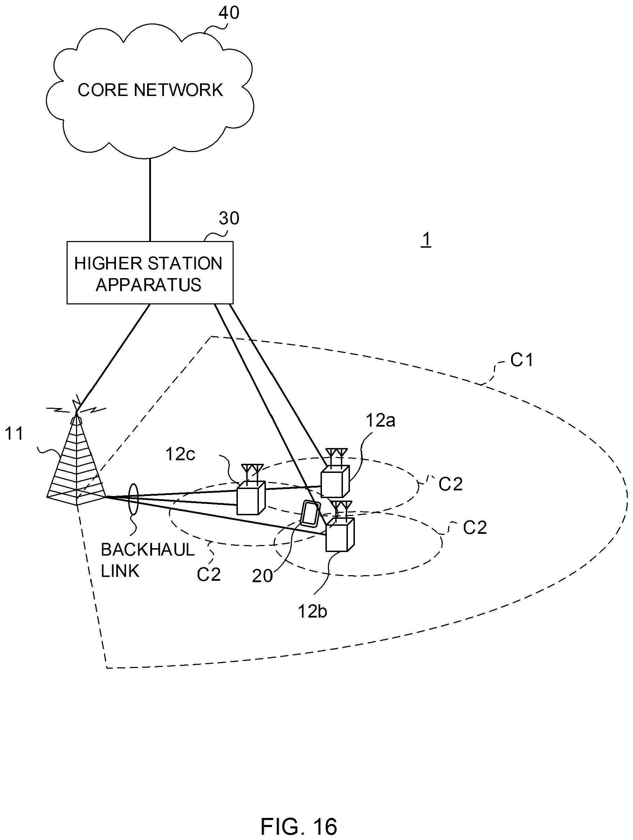

Fig. 16 is a diagram illustrating an example of a schematic configuration of a radio communication system according to one embodiment. A radio communication system 1 can apply carrier aggregation (CA) and/or dual connectivity (DC) in which multiple fundamental frequency blocks (component carriers) with the system bandwidth of an LTE system (e.g., 20 MHz) as one unit are aggregated.

Note that the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), New Radio (NR), Future Radio Access (FRA), New-Radio Access Technology (RAT), or the like, or may be referred to as a system implementing these.

The radio communication system 1 may support dual connectivity between multiple Radio Access Technologies (RATs) (Multi-RAT Dual Connectivity (MR-DC)). MR-DC may include dual connectivity between LTE and NR (E-UTRA-NR Dual Connectivity (EN-DC)) in which an LTE (E-UTRA) base station (eNB) is a master node (MN) and an NR base station (gNB) is a secondary node (SN), dual connectivity between NR and LTE (NR-E-UTRA Dual Connectivity (NE-DC)) in which an NR base station (gNB) is an MN, and an LTE (E-UTRA) base station (eNB) is an SN, etc.

The radio communication system 1 includes a base station 11 that forms a macro cell C1 of a relatively wide coverage, and base stations 12 (12a to 12c) that are placed within the macro cell C1 and form small cells C2 narrower than the macro cell C1. A user terminal 20 is placed in the macro cell C1 and in each small cell C2. The arrangement, numbers, etc. of the cells and the user terminal 20 are not limited to the aspect shown in the figure.

The user terminal 20 can connect to both the base station 11 and each base station 12. The user terminal 20 is expected to use the macro cell C1 and the small cells C2 at the same time using CA or DC. The user terminal 20 may apply CA or DC using multiple cells (CCs) (e.g., five or fewer CCs or six or more CCs).

Between the user terminal 20 and the base station 11, communication can be performed using a carrier of a relatively low frequency band (e.g., 2 GHz) and a narrow bandwidth (also referred to as an existing carrier, a legacy carrier, or the like). On the other hand, between the user terminal 20 and the base stations 12, a carrier of a relatively high frequency band (such as 3.5 GHz or 5 GHz) and a wide bandwidth may be used, or the same carrier as that used with the base station 11 may be used. Note that the configurations of frequency bands used by the base stations are not limited to these.

The user terminal 20 can perform communication in each cell using time division duplex (TDD) and/or frequency division duplex (FDD). In each cell (carrier), a single numerology may be applied, or multiple different numerologies may be applied.

A numerology may be a communication parameter applied to transmission and/or reception of a certain signal and/or channel, and may indicate, for example, at least one of a subcarrier spacing, a bandwidth, a symbol length, a cyclic prefix length, a subframe length, a TTI length, the number of symbols per TTI, a radio frame configuration, specific filtering processing performed by a transceiver in the frequency domain, specific windowing processing performed by a transceiver in the time domain, etc.

For example, a physical channel that is different in the subcarrier spacing of OFDM symbols constituting it and/or is different in the number of OFDM symbols may be said to have a different numerology.

The base station 11 and each base station 12 (or two base stations 12) may be connected by wire (e.g., optical fiber in compliance with the Common Public Radio Interface (CPRI), the X2 interface, or the like), or by radio.

The base station 11 and the base stations 12 are each connected to higher station apparatus 30, and are connected to a core network 40 via the higher station apparatus 30. The higher station apparatus 30 includes, for example, an access gateway device, a radio network controller (RNC), a mobility management entity (MME), etc., but is not limited to these. Each base station 12 may be connected to the higher station apparatus 30 via the base station 11.

The base station 11 is a base station having a relatively wide coverage, and may be referred to as a macro base station, an aggregate node, an eNB (eNodeB), a transmission/reception point, or the like. The base stations 12 are base stations having local coverages, and may be referred to as small base stations, micro base stations, pico base stations, femto base stations, Home eNodeBs (HeNBs), Remote Radio Heads (RRHs), transmission/reception points, or the like. Hereinafter, the base stations 11 and 12, when not distinguished, will be collectively referred to as base stations 10.

The user terminals 20 are terminals that support various communication schemes such as LTE and LTE-A, and may include fixed communication terminals (fixed stations) as well as mobile communication terminals (mobile stations).

In the radio communication system 1, as radio access schemes, orthogonal frequency-division multiple access (OFDMA) is applied to downlinks, and single-carrier frequency-division multiple access (SC-FDMA) and/or OFDMA is applied to uplinks.

OFDMA is a multi-carrier transmission scheme in which a frequency band is divided into a plurality of narrow frequency bands (subcarriers), and data is mapped to the subcarriers to perform communication. SC-FDMA is a single-carrier transmission scheme in which a system bandwidth is divided into bands formed by one or consecutive resource blocks per terminal, and different terminals use different bands to reduce interference between the terminals. Uplink and downlink radio access schemes are not limited to the combination of these, and other radio access schemes may be used.

The radio communication system 1 uses, as downlink channels, a downlink shared channel (Physical Downlink Shared Channel (PDSCH)) shared by user terminals 20, a broadcast channel (Physical Broadcast Channel (PBCH)), a downlink L1/L2 control channel, etc. User data, higher layer control information, System Information Blocks (SIBs), etc. are transmitted by a PDSCH. Master Information Blocks (MIBs) are transmitted by a PBCH.

A downlink L1/L2 control channel includes at least one of a downlink control channel (a Physical Downlink Control Channel (PDCCH)) and/or an Enhanced Physical Downlink Control Channel (EPDCCH)), a Physical Control Format Indicator Channel (PCFICH), and a Physical Hybrid-ARQ Indicator Channel (PHICH). Downlink Control Information (DCI) including scheduling information of a PDSCH and/or a PUSCH, etc. are transmitted by a PDCCH.

The scheduling information may be reported through DCI. For example, DCI to schedule DL data reception may be referred to as a DL assignment. DCI to schedule UL data transmission may be referred to as a UL grant.

The number of OFDM symbols used for a PDCCH is transmitted by a PCFICH. Hybrid Automatic Repeat reQuest (HARQ) delivery acknowledgement information (also referred to as, for example, retransmission control information, HARQ-ACK, ACK/NACK, or the like) to a PUSCH is transmitted by a PHICH. An EPDCCH is frequency-division-multiplexed with a PDSCH (downlink shared data channel) and used to communicate DCI etc., like a PDCCH.

The radio communication system 1 uses, as uplink channels, an uplink shared channel (Physical Uplink Shared Channel (PUSCH)) shared by user terminals 20, an uplink control channel (Physical Uplink Control Channel (PUCCH)), a random access channel (Physical Random Access Channel (PRACH)), etc. User data, higher layer control information, etc. are transmitted by a PUSCH. Downlink radio link quality information (a Channel Quality Indicator (CQI)), delivery acknowledgement information, a scheduling request (SR), etc. are transmitted by a PUCCH. A random access preamble for establishing connection with a cell is transmitted by a PRACH.

In the radio communication system 1, as downlink reference signals, a Cell-specific Reference Signal (CRS), a Channel State Information-Reference Signal (CSI-RS), a DeModulation Reference Signal (DMRS), a Positioning Reference Signal (PRS), etc. are transmitted. In the radio communication system 1, as uplink reference signals, a measurement reference signal (Sounding Reference Signal (SRS)), a demodulation reference signal (DMRS), etc. are transmitted. A DMRS may be referred to as a UE-specific Reference Signal. Reference signals transmitted are not limited to these.

### <Base station>

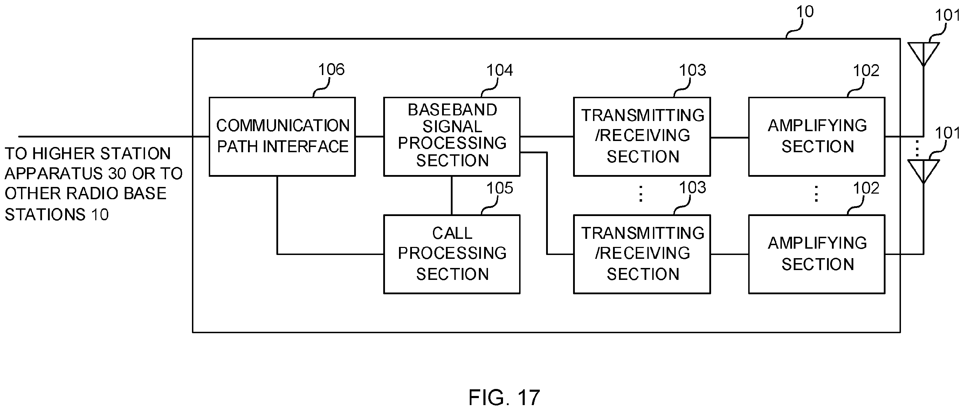

Fig. 17 is a diagram showing an example of an overall configuration of a base station according to one embodiment. The base station 10 includes a plurality of transmitting and receiving antennas 101, amplifying sections 102, transmitting and receiving sections 103, a baseband signal processing section 104, a call processing section 105, and a communication path interface 106. The numbers of the transmitting and receiving antennas 101, the amplifying sections 102, and the transmitting and receiving sections 103 may each be at least one.

User data to be transmitted from the base station 10 to the user terminal 20 by the downlink is input from the higher station apparatus 30 through the communication path interface 106 to the baseband signal processing section 104.

In the baseband signal processing section 104, the user data is subjected to transmission processing such as Packet Data Convergence Protocol (PDCP) layer processing, division and coupling of the user data, Radio Link Control (RLC) layer transmission processing such as RLC retransmission control, Medium Access Control (MAC) retransmission control (e.g., HARQ transmission processing), scheduling, transmission format selection, channel coding, inverse fast Fourier transform (IFFT) processing, and precoding processing, and is transferred to the transmitting and receiving sections 103. A downlink control signal is also subjected to transmission processing such as channel coding and an inverse fast Fourier transform, and is transferred to the transmitting and receiving sections 103.

The transmitting and receiving sections 103 convert baseband signals that are precoded on an antenna-by-antenna basis and output from the baseband signal processing section 104 into a radio frequency band for transmission. The radio frequency signals frequency-converted in the transmitting and receiving sections 103 are amplified by the amplifying sections 102 and transmitted from the transmitting and receiving antennas 101. Each transmitting and receiving section 103 can be constituted by a transmitter/receiver, a transmitting/receiving circuit, or a transmitting/receiving device that is explained based on common understanding in the technical field of the present disclosure. Note that each transmitting and receiving section 103 may be formed as a one-piece transmitting and receiving section, or may be comprised of a transmitting section and a receiving section.

On the other hand, for uplink signals, radio frequency signals received by the transmitting and receiving antennas 101 are amplified by the amplifying sections 102. The transmitting and receiving sections 103 receive the uplink signals amplified by the amplifying sections 102. The transmitting and receiving sections 103 frequency-convert the received signals into baseband signals, and output them to the baseband signal processing section 104.

In the baseband signal processing section 104, user data included in the input uplink signals is subjected to fast Fourier transform (FFT) processing, inverse discrete Fourier transform (IDFT) processing, error correction decoding, MAC retransmission control reception processing, and RLC layer and PDCP layer reception processing, and is transferred to the higher station apparatus 30 via the communication path interface 106. The call processing section 105 performs communication channel call processing (such as configuration and release), state management of the base station 10, radio resource management, etc.

The communication path interface 106 transmits and receives signals to and from the higher station apparatus 30 via a given interface. The communication path interface 106 may transmit and receive signals (backhaul signaling) with another base station 10 via an inter-base station interface (for example, optical fiber in compliance with the Common Public Radio Interface (CPRI) or the X2 interface).

Each transmitting and receiving section 103 may further include an analog beam forming unit that performs analog beam forming. The analog beam forming unit can be constituted by an analog beam forming circuit (e.g., a phase shifter or a phase shift circuit) or an analog beam forming device (e.g., a phase shifter) that is explained based on common understanding in the technical field of the present disclosure. The transmitting and receiving antennas 101 can be constituted by an array antenna, for example. The transmitting and receiving sections 103 may be configured to be able to apply single BF, multi-BF, etc.

The transmitting and receiving sections 103 may transmit signals using a transmission beam, and may receive signals using a reception beam. The transmitting and receiving sections 103 may transmit and/or receive signals using a given beam determined by a control section 301.

The transmitting and receiving sections 103 may receive from the user terminal 20 and/or transmit to the user terminal 20 various types of information described in the above-described embodiments. For example, the transmitting and receiving sections 103 receive a beam recovery request (Beam Failure Recovery reQuest (BFRQ)) on a cell in which a radio link failure has occurred using a random access channel.

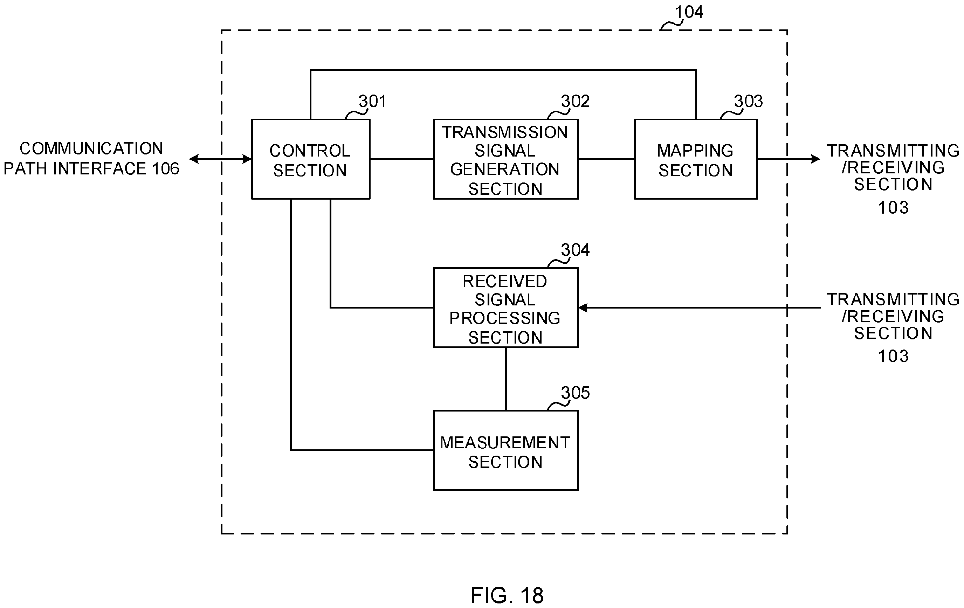

Fig. 18 is a diagram showing an example of a functional configuration of the base station according to one embodiment. In this example, functional blocks of characteristic parts in the present embodiment are mainly shown. It may be assumed that the base station 10 also includes other functional blocks necessary for radio communication.

The baseband signal processing section 104 includes at least the control section (scheduler) 301, a transmission signal generation section 302, a mapping section 303, a reception signal processing section 304, and a measurement section 305. Note that these components only need to be included in the base station 10, and part or all of the components may not be included in the baseband signal processing section 104.

The control section (scheduler) 301 controls the entirety of the base station 10. The control section 301 can be constituted by a controller, a control circuit, or a control device that is explained based on common understanding in the technical field of the present disclosure.

For example, the control section 301 controls the generation of signals in the transmission signal generation section 302, the allocation of signals in the mapping section 303, etc. Further, the control section 301 controls signal reception processing in the reception signal processing section 304, signal measurements in the measurement section 305, etc.

The control section 301 controls scheduling (e.g., resource allocation) of system information, downlink data signals (e.g., signals transmitted on a PDSCH), and downlink control signals (e.g., signals transmitted on a PDCCH and/or an EPDCCH, such as delivery acknowledgement information). Furthermore, the control section 301 controls generation of downlink control signals, downlink data signals, etc., based on the results of determining whether or not retransmission control on uplink data signals is necessary, etc.

The control section 301 controls scheduling of synchronization signals (e.g., PSS/SSS), downlink reference signals (e.g., CRS, CSI-RS, and DMRS), etc.

The control section 301 may perform control to form transmission beams and/or reception beams, using digital BF (e.g., precoding) by the baseband signal processing section 104 and/or analog BF (e.g., phase rotation) by the transmitting and receiving sections 103.

The control section 301 may control radio link monitoring (RLM) and/or beam recovery (BR) for the user terminal 20. The control section 301 may perform control to transmit a response signal to the user terminal 20 in response to a BFRQ.

The transmission signal generation section 302 generates downlink signals (a downlink control signal, a downlink data signal, a downlink reference signal, etc.) based on instructions from the control section 301, and outputs them to the mapping section 303. The transmission signal generation section 302 can be constituted by a signal generator, a signal generation circuit, or a signal generation device that is explained based on common understanding in the technical field of the present disclosure.

For example, the transmission signal generation section 302 generates a DL assignment to report downlink data allocation information, and/or a UL grant to report uplink data allocation information, based on an instruction from the control section 301. The DL assignment and the UL grant are both DCI, and follow the DCI format. A downlink data signal is subjected to coding processing, modulation processing, etc., according to a coding rate, a modulation scheme, etc. determined based on Channel State Information (CSI) from each user terminal 20.

The mapping section 303 maps a downlink signal generated in the transmission signal generation section 302 to given radio resources based on an instruction from the control section 301, and outputs it to the transmitting and receiving sections 103. The mapping section 303 can be constituted by a mapper, a mapping circuit, or a mapping device that is explained based on common understanding in the technical field of the present disclosure.

The reception signal processing section 304 performs reception processing (such as demapping, demodulation, and decoding) on received signals input from the transmitting and receiving sections 103. Here, the received signals are, for example, uplink signals transmitted from the user terminal 20 (such as an uplink control signal, an uplink data signal, and an uplink reference signal). The reception signal processing section 304 can be constituted by a signal processor, a signal processing circuit, or a signal processing device that is explained based on common understanding in the technical field of the present disclosure.

The reception signal processing section 304 outputs information decoded by the reception processing to the control section 301. For example, when a PUCCH including a HARQ-ACK is received, the HARQ-ACK is output to the control section 301. Further, the reception signal processing section 304 outputs received signals and/or signals that have been subjected to the reception processing to the measurement section 305.

The measurement section 305 performs measurements on the received signals. The measurement section 305 can be constituted by a measuring instrument, a measuring circuit, or a measuring device that is explained based on common understanding in the technical field of the present disclosure.

For example, the measurement section 305 may perform a Radio Resource Management (RRM) measurement, a Channel State Information (CSI) measurement, etc., based on received signals. The measurement section 305 may measure received power (e.g., Reference Signal Received Power (RSRP)), received quality (e.g., Reference Signal Received Quality (RSRQ)), signal-to-interference-plus-noise ratio (SINR), signal-to-noise ratio (SNR), signal strength (e.g., Received Signal Strength Indicator (RSSI)), propagation path information (e.g., CSI), etc. The measurement results may be output to the control section 301.

### <User terminal>

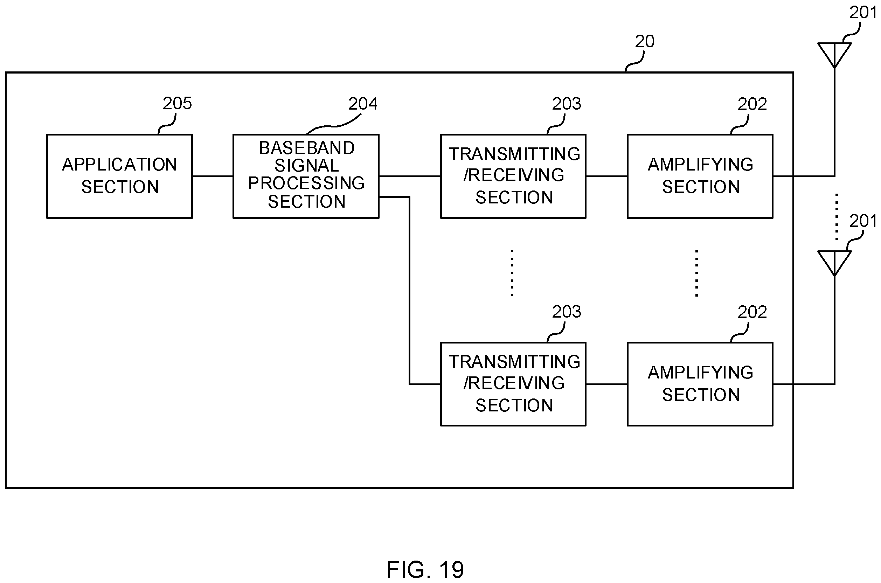

Fig. 19 is a diagram showing an example of an overall configuration of the user terminal according to one embodiment. The user terminal 20 includes a plurality of transmitting and receiving antennas 201, amplifying sections 202, transmitting and receiving sections 203, a baseband signal processing section 204, and an application section 205. The numbers of the transmitting and receiving antennas 201, the amplifying sections 202, and the transmitting and receiving sections 203 may each be at least one.

Radio frequency signals received by the transmitting and receiving antennas 201 are amplified by the amplifying sections 202. The transmitting and receiving sections 203 receive downlink signals amplified by the amplifying sections 202. The transmitting and receiving sections 203 frequency-convert the received signals into baseband signals, and output them to the baseband signal processing section 204. Each transmitting and receiving section 203 can be constituted by a transmitter/receiver, a transmitting/receiving circuit, or a transmitting/receiving device that is explained based on common understanding in the technical field of the present disclosure. Each transmitting and receiving section 203 may be formed as a one-piece transmitting and receiving section, or may be comprised of a transmitting section and a receiving section.

The baseband signal processing section 204 performs, on the input baseband signals, FFT processing, error correction decoding, retransmission control reception processing, etc. Downlink user data is transferred to the application section 205. The application section 205 performs processing related to a higher layer above the physical layer and the MAC layer, etc. Of downlink data, broadcast information may also be transferred to the application section 205.

On the other hand, uplink user data is input from the application section 205 to the baseband signal processing section 204. The baseband signal processing section 204 performs retransmission control transmission processing (e.g., HARQ transmission processing), channel coding, precoding, discrete Fourier transform (DFT) processing, IFFT processing, etc. for transfer to the transmitting and receiving sections 203.

The transmitting and receiving sections 203 convert baseband signals output from the baseband signal processing section 204 into a radio frequency band for transmission. The radio frequency signals frequency-converted by the transmitting and receiving sections 203 are amplified by the amplifying sections 202 and transmitted from the transmitting and receiving antennas 201.

Each transmitting and receiving section 203 may further include an analog beam forming unit that performs analog beam forming. The analog beam forming unit can be constituted by an analog beam forming circuit (e.g., a phase shifter or a phase shift circuit) or an analog beam forming device (e.g., a phase shifter) that is explained based on common understanding in the technical field of the present disclosure. The transmitting and receiving antennas 201 can be constituted by an array antenna, for example. The transmitting and receiving sections 203 may be configured to be able to apply single BF, multi-BF, etc.

The transmitting and receiving sections 203 may transmit signals using a transmission beam, and may receive signals using a reception beam. The transmitting and receiving sections 203 may transmit and/or receive signals using a given beam determined by the control section 401.

Further, the transmitting and receiving sections 203 may transmit a beam recovery request (Beam Failure Recovery reQuest (BFRQ)) on a cell in which a radio link failure has occurred, using a random access channel. Furthermore, the transmitting and receiving sections 203 may receive a response to the beam recovery request in a given cell or the cell in which beam recovery has been reported.

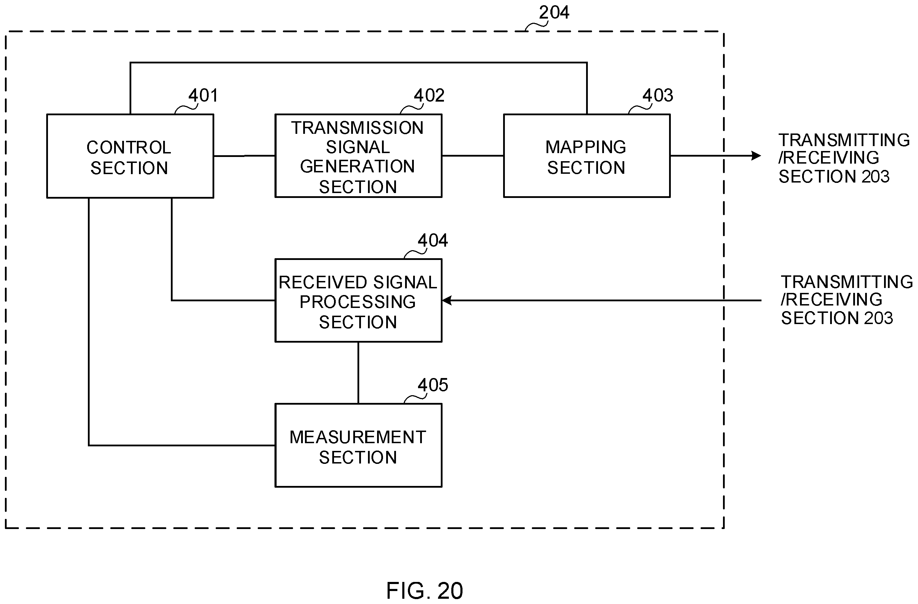

Fig. 20 is a diagram showing an example of a functional configuration of the user terminal according to one embodiment. In this example, the functional blocks of characteristic parts in the present embodiment are mainly shown. It may be assumed that the user terminal 20 also includes other functional blocks necessary for radio communication.

The baseband signal processing section 204 included in the user terminal 20 includes at least a control section 401, a transmission signal generation section 402, a mapping section 403, a reception signal processing section 404, and a measurement section 405. Note that these components only need to be included in the user terminal 20, and part or all of the components may not be included in the baseband signal processing section 204.

The control section 401 controls the entirety of the user terminal 20. The control section 401 can be constituted by a controller, a control circuit, or a control device that is explained based on common understanding in the technical field of the present disclosure.

The control section 401 controls, for example, generation of signals in the transmission signal generation section 402, allocation of signals in the mapping section 403, etc. Furthermore, the control section 401 controls signal reception processing in the reception signal processing section 404, signal measurements in the measurement section 405, etc.

The control section 401 acquires a downlink control signal and a downlink data signal transmitted from the base station 10 from the reception signal processing section 404. The control section 401 controls generation of an uplink control signal and/or an uplink data signal, based on the result of determining whether or not retransmission control on a downlink control signal and/or a downlink data signal is necessary, or the like.

The control section 401 may perform control to form a transmission beam and/or a reception beam, using digital BF (e.g., precoding) by the baseband signal processing section 204 and/or analog BF (e.g., phase rotation) by the transmitting and receiving sections 203.

The control section 401 may include a MAC layer processing section and a PHY layer processing section. Note that the MAC layer processing section and/or the PHY layer processing section may be implemented by one of the control section 401, the transmission signal generation section 402, the mapping section 403, the reception signal processing section 404, and the measurement section 405, or a combination of these.

The MAC layer processing section performs processing in the MAC layer, and the PHY layer processing section performs processing in the PHY layer. For example, downlink user data, broadcast information, etc. input from the PHY layer processing section may be subjected to the processing in the MAC layer processing section, and output to a higher layer processing section that performs processing in the RLC layer, the PDCP layer, or the like.

The PHY layer processing section may detect a beam failure, a partial beam failure (PBF), etc. The PHY layer processing section may notify the MAC layer processing section of information (an instance) about a detected beam failure, PBF, or the like. That is, if the radio link quality of resource configuration of some BFD-RSs of configured BFD-RSs is lower than a given threshold value, the control section 401 may indicate an instance (e.g., a PBF instance) about a beam failure from a lower layer (the PHY layer) to a higher layer (the MAC layer).

The MAC layer processing section may trigger transmission of a beam recovery request (BFRQ), a PBFRQ, or the like in the PHY layer processing section. For example, the MAC layer processing section may trigger transmission of a beam recovery request, based on information about a beam failure reported from the PHY layer processing section. That is, the control section 401 may trigger transmission of a BFRQ using a PUCCH or a PUSCH when a higher layer (MAC layer) has received the above-described instance a certain number of times or more.

Further, the control section 401 may control to transmit a random access channel in a given cell configured in advance or a cell in which a radio link failure has occurred.

For example, the control section 401 may determine the number of time resources of a random access channel configured in a transmission candidate region of the random access channel, based on a subcarrier spacing applied in a cell in which a radio link failure has occurred and a subcarrier spacing applied in a given cell.

Alternatively, the control section 401 may control to receive a response to each beam recovery request, based on a response window configured for each beam recovery request report. Further, if response windows corresponding to different beam recovery request reports at least overlap, the control section 401 may control not to perform monitoring at least on an overlap portion.

The transmission signal generation section 402 generates uplink signals (such as an uplink control signal, an uplink data signal, and an uplink reference signal) based on instructions from the control section 401, and outputs them to the mapping section 403. The transmission signal generation section 402 can be constituted by a signal generator, a signal generation circuit, or a signal generation device that is explained based on common understanding in the technical field of the present disclosure.

For example, the transmission signal generation section 402 generates uplink control signals about delivery acknowledgement information, channel state information (CSI), etc., based on instructions from the control section 401. The transmission signal generation section 402 also generates an uplink data signal based on an instruction from the control section 401. For example, if a UL grant is included in a downlink control signal reported from the base station 10, the transmission signal generation section 402 is instructed to generate an uplink data signal from the control section 401.

The mapping section 403 maps an uplink signal generated in the transmission signal generation section 402 to radio resources, based on an instruction from the control section 401, and outputs it to the transmitting and receiving sections 203. The mapping section 403 can be constituted by a mapper, a mapping circuit, or a mapping device that is explained based on common understanding in the technical field of the present disclosure.

The reception signal processing section 404 performs reception processing (such as demapping, demodulation, and decoding) on received signals input from the transmitting and receiving sections 203. Here, the received signals are, for example, downlink signals (a downlink control signal, a downlink data signal, a downlink reference signal, etc.) transmitted from the base station 10. The reception signal processing section 404 can be constituted by a signal processor, a signal processing circuit, or a signal processing device that is explained based on common understanding in the technical field of the present disclosure. The reception signal processing section 404 can constitute a receiving section according to the present disclosure.

The reception signal processing section 404 outputs information decoded by the reception processing to the control section 401. The reception signal processing section 404 outputs, for example, broadcast information, system information, RRC signaling, DCI, etc. to the control section 401. The reception signal processing section 404 outputs received signals and/or signals that have been subjected to the reception processing to the measurement section 405.

The measurement section 405 performs measurements on the received signals. The measurement section 405 can be constituted by a measuring instrument, a measuring circuit, or a measuring device that is explained based on common understanding in the technical field of the present disclosure.

For example, the measurement section 405 may perform RRM measurements, CSI measurements, etc. based on the received signals. The measurement section 405 may measure received power (e.g., RSRP), received quality (e.g., RSRQ, SINR, or SNR), signal strength (e.g., RSSI), propagation path information (e.g., CSI), etc. The measurement results may be output to the control section 401.

### (Hardware configuration)

The block diagrams used in the description of the above embodiments show blocks in functional units. These functional blocks (components) are implemented by a desired combination of at least one of hardware and software. How to implement each functional block is not particularly limited. That is, each functional block may be implemented using a single physically or logically combined device, or may be implemented by directly or indirectly connecting two or more physically or logically separate devices (using, for example, wire, radio, or the like) and using the two or more devices. The functional blocks may be implemented by combining software with the single device or the two or more devices.

Here, the functions include, but are not limited to, judgement, decision, determination, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, etc. For example, a functional block (component) that functions to transmit may be referred to as a transmitting section/section, a transmitter, or the like. As described above, none is limited to a particular way of implementation.

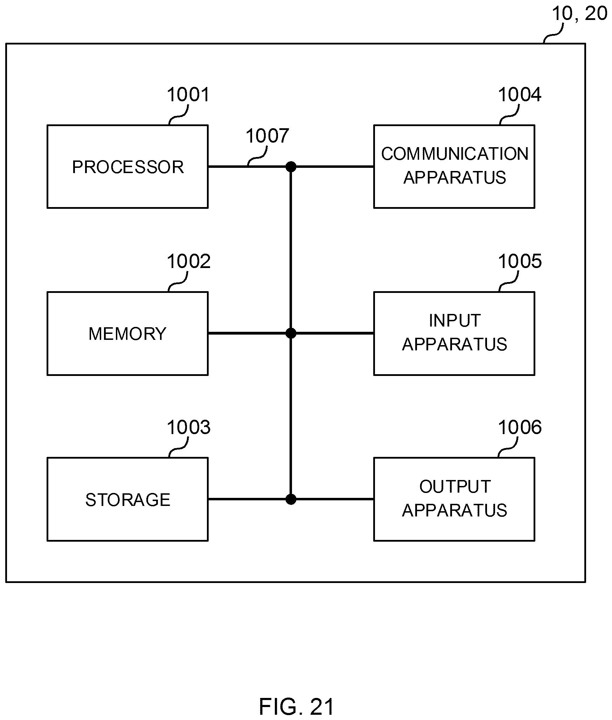

For example, the base station, the user terminal, etc. according to one embodiment of the present disclosure may function as computers that execute the processing in the radio communication method of the present disclosure. Fig. 21 is a diagram showing an example of a hardware configuration of the base station and the user terminal according to one embodiment. The above-described base station 10 and user terminal 20 may each be physically formed as a computer apparatus that includes a processor 1001, a memory 1002, a storage 1003, a communication apparatus 1004, an input apparatus 1005, an output apparatus 1006, a bus 1007, etc.

Note that in the following description, the word "apparatus" may be replaced with a circuit, a device, a unit, or the like. The hardware configuration of the base station 10 and the user terminal 20 may be designed to include one or more of the apparatuses shown in the figure, or may be designed not to include some apparatuses.

For example, although the single processor 1001 is shown in the figure, a plurality of processors may be included. Furthermore, processing may be executed by a single processor, or processing may be executed by two or more processors simultaneously, sequentially, or using other methods. The processor 1001 may be implemented by one or more chips.

Each function of the base station 10 and the user terminal 20 is implemented by given software (program) being read on hardware such as the processor 1001 and the memory 1002, by which the processor 1001 performs operations, controlling communication via the communication apparatus 1004, and controlling at least one of reading and writing of data at the memory 1002 and the storage 1003.

For example, the processor 1001 runs an operating system to control the entire computer. The processor 1001 may be constituted by a central processing section (CPU) that includes an interface with peripheral equipment, a control section, an arithmetic unit, a register, etc. For example, the above-described baseband signal processing section 104 (204), call processing section 105, and others may be implemented by the processor 1001.

The processor 1001 reads programs (program codes), software modules, data, etc. from at least one of the storage 1003 and the communication apparatus 1004 into the memory 1002, and executes various types of processing according to these. As the programs, programs to cause the computer to execute at least part of the operations described in the above embodiments are used. For example, the control section 401 of the user terminal 20 may be implemented by a control program that is stored in the memory 1002 and operates on the processor 1001. The other functional blocks may be implemented likewise.

The memory 1002 is a computer-readable recording medium, and may be constituted by, for example, at least one of a read-only memory (ROM), an erasable programmable ROM (EPROM), an electrically EPROM (EEPROM), a random-access memory (RAM), and another suitable storage medium. The memory 1002 may be referred to as a register, a cache, a main memory (main storage), or the like. The memory 1002 can store programs (program codes), software modules, etc. that are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (e.g., a compact disc (such as a compact disc ROM (CD-ROM)), a digital versatile disc, or a Blu-ray (registered trademark) disk), a removable disk, a hard disk drive, a smart card, a flash memory device (e.g., a card, a stick, or a key drive), a magnetic stripe, a database, a server, and another suitable storage medium. The storage 1003 may be referred to as a "secondary storage apparatus".

The communication apparatus 1004 is hardware (a transmitting and receiving device) for performing inter-computer communication via at least one of a wired network and a wireless network, and is also referred to, for example, as a network device, a network controller, a network card, a communication module, or the like. The communication apparatus 1004 may include a high frequency switch, a duplexer, a filter, a frequency synthesizer, etc. to implement, for example, at least one of Frequency Division Duplex (FDD) and Time Division Duplex (TDD). For example, the above-described transmitting and receiving antennas 101 (201), amplifying sections 102 (202), transmitting and receiving sections 103 (203), communication path interface 106, and others may be implemented by the communication apparatus 1004. Each transmitting and receiving section 103 may be implemented by a transmitting section 103a and a receiving section 103b that are physically or logically separated.

The input apparatus 1005 includes input devices for receiving input from the outside (such as a keyboard, a mouse, a microphone, a switch, a button, and a sensor). The output apparatus 1006 includes output devices for performing output to the outside (such as a display, a speaker, and a light-emitting diode (LED) lamp). The input apparatus 1005 and the output apparatus 1006 may be integrated (e.g., a touch panel).

The apparatuses such as the processor 1001 and the memory 1002 are connected by a bus 1007 for communicating information. The bus 1007 may be formed using a single bus, or may be formed using different buses for different connections between the apparatuses.

The base station 10 and the user terminal 20 may include hardware such as a microprocessor, a digital signal processor (DSP), an application-specific integrated circuit (ASIC), a programmable logic device (PLD), a field-programmable gate array (FPGA), etc. Part or all of the functional blocks may be implemented using the hardware. For example, the processor 1001 may be implemented using at least one of these pieces of hardware.

### (Modifications)

Note that the terms described in the present disclosure and the terms necessary to understand the present disclosure may be replaced with terms having the same or similar meanings. For example, at least one of a channel and a symbol may be a signal (signaling). A signal may be a message. A reference signal may be abbreviated as an RS, and may be referred to as a pilot, a pilot signal, or the like, depending on a standard applied. Furthermore, a component carrier (CC) may be referred to as a cell, a frequency carrier, a carrier frequency, or the like.

A radio frame may be comprised of one or more periods (frames) in the time domain. The one or more periods (frames) constituting the radio frame may be referred to as a subframe(s). Furthermore, a subframe may be comprised of one or more slots in the time domain. A subframe may have a fixed duration (e.g., 1 ms) independent of a numerology.

Here, a numerology may be a communication parameter applied to at least one of transmission and reception of a certain signal or channel. For example, a numerology may indicate at least one of a subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, etc.

A slot may be comprised of one or more symbols in the time domain (such as orthogonal frequency-division multiplexing (OFDM) symbols or single-carrier frequency-division multiple access (SC-FDMA) symbols). Further, a slot may be a time unit based on a numerology.

A slot may include a plurality of mini slots. Each mini slot may be comprised of one or more symbols in the time domain. A mini slot may be referred to as a subslot. A mini slot may be comprised of fewer symbols than a slot. A PDSCH (or a PUSCH) transmitted in a time unit larger than a mini slot may be referred to as PDSCH (PUSCH) mapping type A. A PDSCH (or a PUSCH) transmitted using a mini slot may be referred to as PDSCH (PUSCH) mapping type B.

A radio frame, a subframe, a slot, a mini slot, and a symbol each represent a time unit in signal transmission. For a radio frame, a subframe, a slot, a mini slot, and a symbol, other corresponding names may be used. Note that time units such as a frame, a subframe, a slot, a mini slot, and a symbol in the present disclosure may be replaced with each other.

For example, one subframe may be referred to as a transmission time interval (TTI). A plurality of consecutive subframes may be referred to as a TTI. One slot or one mini slot may be referred to as a TTI. That is, at least one of a subframe and a TTI may be a subframe (1 ms) in existing LTE, or may be a period shorter than 1 ms (e.g., one to thirteen symbols), or may be a period longer than 1 ms. Note that a unit representing a TTI may be referred to as a slot, a mini slot, or the like instead of a subframe.

Here, a TTI refers to, for example, a minimum time unit of scheduling in radio communication. For example, in LTE systems, a base station performs scheduling to allocate radio resources (such as a frequency bandwidth and transmission power that can be used at each user terminal) in TTI units to each user terminal. Note that the definition of a TTI is not limited to this.

A TTI may be a transmission time unit of a channel-coded data packet (transport block), a code block, a codeword, etc. or may be a processing section of scheduling, link adaptation, etc. When a TTI is given, a time interval (e.g., the number of symbols) to which a transport block, a code block, a codeword, or the like is actually mapped may be shorter than the TTI.

When one slot or one mini slot is referred to as a TTI, one or more TTIs (that is, one or more slots or one or more mini slots) may be a minimum time unit of scheduling. The number of slots (the number of mini slots) constituting the minimum time unit of scheduling may be controlled.

A TTI having a duration of 1 ms may be referred to as a usual TTI (a TTI in LTE Rel. 8 to 12), a normal TTI, a long TTI, a usual subframe, a normal subframe, a long subframe, a slot, or the like. A TTI shorter than a usual TTI may be referred to as a shortened TTI, a short TTI, a partial or fractional TTI, a shortened subframe, a short subframe, a mini slot, a subslot, a slot, or the like.

A long TTI (such as a normal TTI or a subframe) may be replaced with a TTI having a duration exceeding 1 ms. A short TTI (such as a shortened TTI) may be replaced with a TTI having a TTI length less than the TTI length of a long TTI and more than or equal to 1 ms.

A resource block (RB) is a resource allocation unit in the time domain and the frequency domain, and may include one or more consecutive subcarriers in the frequency domain. The number of subcarriers included in an RB may be the same regardless of numerologies, and may be twelve, for example. The number of subcarriers included in an RB may be determined based on a numerology.

An RB may include one or more symbols in the time domain, and may have a length of one slot, one mini slot, one subframe, or one TTI. One TTI, one subframe, etc. may each be comprised of one or more resource blocks.

One or more RBs may be referred to as a physical resource block (PRB), a subcarrier group (SCG), a resource element group (REG), a PRB pair, an RB pair, or the like.

A resource block may be comprised of one or more resource elements (REs). For example, one RE may be a radio resource region of one subcarrier and one symbol.

A bandwidth part (BWP) (which may be referred to as a partial bandwidth or the like) may represent a subset of consecutive common resource blocks (RBs) for a certain numerology in a certain carrier. Here, common RBs may be specified by the indexes of RBs based on a common reference point of the carrier. PRBs may be defined in a BWP and numbered within the BWP.

BWPs may include a BWP for UL (UL BWP) and a BWP for DL (DL BWP). For a UE, one or more BWPs may be configured within one carrier.

At least one of the configured BWPs may be active, and the UE does not have to expect transmission/reception of a given signal/channel outside the active BWP. Note that "cell", "carrier", etc. in the present disclosure may be replaced with "BWP".

Note that the structures of a radio frame, a subframe, a slot, a mini slot, a symbol, etc. described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, and the number of symbols, the symbol length, the cyclic prefix (CP) length in a TTI can be variously changed.

The information, parameters, etc. described in the present disclosure may be represented using absolute values, or may be represented using relative values with respect to given values, or may be represented using other corresponding information. For example, a radio resource may be specified by a given index.

The names used for parameters etc. in the present disclosure are in no respect limiting. In addition, equations etc. using these parameters may differ from those explicitly disclosed in the present disclosure. Since various channels (such as a Physical Uplink Control Channel (PUCCH) and a Physical Downlink Control Channel (PDCCH)) and information elements can be identified by various suitable names, the various names assigned to these various channels and information elements are in no respect limiting.

The information, signals, etc. described in the present disclosure may be represented using any of a variety of different technologies. For example, data, an instruction, a command, information, a signal, a bit, a symbol, a chip, etc., which may be referred to throughout the above description, may be represented by a voltage, a current, an electromagnetic wave, a magnetic field or a magnetic particle, an optical field or an optical photon, or any combination of these.

Information, signals, etc. can be output in at least one of a direction from a higher layer to a lower layer and a direction from a lower layer to a higher layer. Information, signals, etc. may be input and output via a plurality of network nodes.

Input and output information, signals, etc. may be stored in a specific location (e.g., memory), or may be managed using a control table. Information, signals, etc. to be input and output can be overwritten, updated, or appended. Information, signals, etc. that have been output may be deleted. Information, signals, etc. that have been input may be transmitted to another apparatus.

Notification of information is not limited to that in the aspects/embodiments described in the present disclosure, and may be performed using other methods. For example, notification of information may be implemented by physical layer signaling (e.g., Downlink Control Information (DCI) or Uplink Control Information (UCI)), higher layer signaling (e.g., Radio Resource Control (RRC) signaling, broadcast information (such as a Master Information Block (MIB) or a System Information Block (SIB)), or Medium Access Control (MAC) signaling), another signal, or a combination of these.

Note that physical layer signaling may be referred to as Layer 1/Layer 2 (L1/L2) control information (a L1/L2 control signal), L1 control information (a L1 control signal), or the like. RRC signaling may be referred to as an RRC message, and may be, for example, an RRCConnectionSetup message, an RRCConnectionReconfiguration message, or the like. MAC signaling may be reported using, for example, a MAC control element (MAC CE).

Notification of a given piece of information (e.g., notification that "X holds") does not necessarily have to be made explicitly, and may be made implicitly (for example, by not making a notification of the given piece of information, or by making a notification of another piece of information).

Determination may be performed using a value represented by one bit (0 or 1), or may be performed using a Boolean represented by true or false, or may be performed by comparing numerical values (e.g., comparison with a given value).

Software, regardless of whether it is referred to as software, firmware, middleware, microcode, or a hardware description language, or referred to by another name, should be interpreted broadly to mean a command, a command set, a code, a code segment, a program code, a program, a subprogram, a software module, an application, a software application, a software package, a routine, a subroutine, an object, an executable file, an execution thread, a procedure, a function, etc.

Software, commands, information, etc. may be transmitted and received via a transmission medium. For example, when software is transmitted from a website, a server, or another remote source using at least one of a wired technology (a coaxial cable, an optical fiber cable, a twisted-pair cable, a digital subscriber line (DSL), or the like) and a wireless technology (infrared radiation, microwaves, or the like), at least one of the wired technology and the wireless technology is included in the definition of the transmission medium.

The terms "system" and "network" as used in the present disclosure may be used interchangeably.

In the present disclosure, terms such as "precoding", "precoder", "weight (precoding weight)", "quasi-co-location (QCL)", "transmission power", "phase rotation", "antenna port", "antenna port group", "layer", "number of layers", "rank", "beam", "beam width", "beam angle", "antenna", "antenna element", and "panel" may be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" may be used interchangeably. A base station may be referred to by a term such as a macro cell, a small cell, a femto cell, or a pico cell.

A base station can accommodate one or more (e.g., three) cells. When a base station accommodates multiple cells, the entire coverage area of the base station can be divided into multiple smaller areas. Each smaller area can provide communication service through a base station subsystem (e.g., an indoor small base station (a remote radio head (RRH)). The term "cell" or "sector" refers to part or all of the coverage area of at least one of a base station and a base station subsystem that provides communication service in this coverage.

In the present disclosure, terms such as "mobile station (MS)", "user terminal", "user equipment (UE)", and "terminal" may be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of a base station and a mobile station may be referred to as a transmitting apparatus, a receiving apparatus, a communication apparatus, or the like. At least one of a base station and a mobile station may be a device mounted on a mobile object, a mobile object itself, or the like. The mobile object may be transportation (such as a vehicle or an airplane), an unmanned mobile object (such as a drone or an autonomous driving car), or a (manned or unmanned) robot. At least one of a base station and a mobile station may be an apparatus that does not necessarily move during communication operation. For example, at least one of a base station and a mobile station may be an Internet of Things (IoT) device such as a sensor.

A base station in the present disclosure may be replaced with a user terminal. For example, each aspect/embodiment of the present disclosure may be applied to a configuration in which communication between a base station and a user terminal is replaced with communication between multiple user terminals (which may be referred to as, for example, Device-to-Device (D2D), Vehicle-to-Everything (V2X), or the like). In this case, the user terminal 20 may have the functions of the base station 10 described above. In addition, words such as "uplink" and "downlink" may be replaced with a word for terminal-to-terminal communication (e.g., "side"). For example, an uplink channel, a downlink channel, etc. may be replaced with a side channel.

Likewise, a user terminal in the present disclosure may be replaced with a base station. In this case, the base station 10 may have the functions of the user terminal 20 described above.

An operation performed by a base station in the present disclosure may be performed by its upper node in some cases. It is obvious that in a network including one or more network nodes having base stations, various operations performed for communication with terminals can be performed by the base stations, the one or more network nodes other than base stations (which may be a Mobility Management Entity (MME), a Serving-Gateway (S-GW), etc., but are not limited to them), or a combination of these.

The aspects/embodiments described in the present disclosure may be used singly or in combination, or may be switched with implementation. The processing order, sequence, flowchart, etc. in the aspects/embodiments described in the present disclosure may be changed in order as long as inconsistencies do not arise. For example, the methods described in the present disclosure have presented various step elements using an exemplary order, and are not limited to the presented specific order.

The aspects/embodiments described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), New-Radio Access Technology (RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems using other adequate radio communication methods, next generation systems expanded based on these, etc. Further, the aspects/embodiments may be applied to a combination of two or more systems (e.g., a combination of LTE or LTE-A and 5G).

The phrase "based on" as used in the present disclosure does not mean "based only on", unless otherwise specified. In other words, the phrase "based on" means both "based only on" and "based at least on".

All references to the elements using designations such as "first" and "second" as used in the present disclosure do not generally limit the amount or sequence of these elements. These designations can be used in the present disclosure only as a convenient way to distinguish between two or more elements. Thus, references to first and second elements do not mean that only the two elements can be employed, or that the first element must precede the second element in some form.

The term "determining" as used in the present disclosure may include a wide variety of operations. For example, "determining" may be interpreted as "determining" judging, calculating, computing, processing, deriving, investigating, looking up, search, inquiry (e.g., search in a table, a database, or another data structure), ascertaining, etc.

Furthermore, "determining" may be interpreted as "determining" receiving (e.g., receiving information), transmitting (e.g., transmitting information), input, output, accessing (e.g., accessing data in memory), etc.

Moreover, "determining" may be interpreted as "determining" resolving, selecting, choosing, establishing, comparing, etc. That is, "determining" may be interpreted as "determining" some action.

In addition, "determining" may be replaced with "assuming", "expecting", "considering", or the like.

The terms "connected" and "coupled", or all variations of them as used in the present disclosure mean all direct or indirect connections or couplings between two or more elements, and may include the existence of one or more intermediate elements between two elements "connected" or "coupled" to each other. Coupling or connection between elements may be physical, logical, or a combination of these. For example, "connection" may be replaced with "access".

When two elements are connected in the present disclosure, the elements can be considered to be "connected" or "coupled" to each other, using one or more wires, a cable, a printed electrical connection, or the like, or using, as some non-limiting and non-inclusive examples, electromagnetic energy having a wavelength in the radio frequency range, the microwave range, or the optical (both visible and invisible) range, or the like.

In the present disclosure, the words "A and B are different" may mean that "A and B are different from each other". The words may alternatively mean that "A and B are different from C". Words such as "separate" and "coupled" may be interpreted like "different".

When "include", "including", and variations of these are used in the present disclosure, these words are intended to be inclusive like the word "comprising". Furthermore, the word "or" as used in the present disclosure is intended not to be exclusive OR.

In the present disclosure, when the translation adds articles such as a, an, and the in English, the present disclosure may include cases where nouns following these articles are in the plural.

Although the invention according to the present disclosure has been described in detail above, it is obvious to a person skilled in the art that the invention according to the present disclosure is not limited to the embodiments described in the present disclosure. The invention according to the present disclosure can be implemented in modified and altered modes without departing from the spirit and scope of the invention defined based on the description of the claims. Thus, the description of the present disclosure is for the purpose of explaining examples and does not bring any limiting meaning to the invention according to the present disclosure.

## Claims

1. A user terminal comprising:
a transmitting section that transmits a beam recovery request (Beam Failure Recovery reQuest (BFRQ)) on a cell in which a radio link failure has occurred, using a random access channel; and
a control section that performs transmission of the random access channel in a given cell configured in advance or the cell in which the radio link failure has occurred.

2. The user terminal according to claim 1, wherein the control section determines the number of time resources of the random access channel configured in a transmission candidate region of the random access channel, based on a subcarrier spacing applied in the cell in which the radio link failure has occurred and a subcarrier spacing applied in the given cell.

3. The user terminal according to claim 1 or 2, further comprising a receiving section that receives a response to the beam recovery request in the given cell or the cell in which the beam recovery has been reported.

4. The user terminal according to claim 3, wherein the control section receives a response to each beam recovery request, based on a response window configured for each beam recovery request report.

5. The user terminal according to claim 4, wherein, when response windows corresponding to different beam recovery request reports at least overlap, the control section does not perform monitoring at least on an overlap portion.

6. A radio communication method for a user terminal, comprising the steps of:
transmitting a beam recovery request (Beam Failure Recovery reQuest (BFRQ)) on a cell in which a radio link failure has occurred, using a random access channel; and
transmitting the random access channel in a given cell configured in advance or the cell in which the radio link failure has occurred.
